# EUROPEAN PATENT APPLICATION

(11) **EP 4 418 804 A1**
(43) Date of publication of application: **21.08.2024**
(21) Application number: 22887340.2
(22) Date of filing: 13.09.2022
(51) Int. Cl.: H04W 76/27, H04W 76/25, H04W 76/38, H04L 69/28, H04W 88/02

(54) **ELECTRONIC DEVICE FOR CHANGING RADIO RESOURCE CONTROL STATE, AND OPERATING METHOD THEREFOR**

(30) Priority: 26.10.2021 KR 20210143163
(71) Applicant: Samsung Electronics Co., Ltd., Suwon-si, Gyeonggi-do 16677 (KR)
(72) Inventor: LEE, Kyunghoon, Suwon-si Gyeonggi-do 16677 (KR); KIM, Hyejeong, Suwon-si Gyeonggi-do 16677 (KR); BAE, Moongyo, Suwon-si Gyeonggi-do 16677 (KR); LEE, Soomin, Suwon-si Gyeonggi-do 16677 (KR)
(74) Representative: Gulde & Partner
(86) International application number: PCT/KR2022/013632
(87) International publication number: WO 2023/075136

(57) **Abstract**

According to various embodiments, an electronic device comprises at least one processor, wherein the at least one processor can confirm, in an RRC_CONNECTED state, the expiration of a first timer having an expiration time shorter than that of an RRC inactivity timer set by means of a network, and confirm, on the basis of the expiration of the first timer, whether a UEAssistanceInformation message including a preferredRRC-State information element can be transmitted. The at least one processor can be configured to confirm whether the RRC inactivity timer, having been started simultaneously with the first timer, has expired if the UEAssistanceInformation message including the preferredRRC-State information element cannot be transmitted, and change the RRC state from the RRC_CONNECTED state to an RRC_INACTIVE state or an RRC_IDLE state,on the basis of the expiration of the RRC inactivity timer. If the UEAssistanceInformation message including the preferredRRC-State information element can be transmitted, the at least one processor can be configured to transmit, to the network, the UEAssistanceInformation message including the preferredRRC-State information element for causing the change from the RRC _CONNECTED state to the RRC _INACTIVE state or the RRC_IDLE state. Other various embodiments are possible.

## Description

### [Technical Field]

Various embodiments relate to an electronic device and operation method for changing a radio resource control (RRC) state.

### [Background Art]

In long term evolution (LTE), the RRC state may be either the RRC_CONNECTED state or the RRC_IDLE state, depending on whether an RRC connection is established between user equipment (UE) and the network. In the RRC_CONNECTED state, the UE and the network may transmit and/or receive data based on the RRC connection established between the UE and the network. The network may manage the location of the UE on a per-cell basis. The UE may be registered (or attached) to the core network. In the RRC_IDLE state, an RRC connection may not be established between the UE and the network. In the RRC_IDLE state, the network may manage the UE's location on a per-tracking area (TA) basis. The electronic device 101 may be in a state where it is not registered with the core network. The UE must establish an RRC connection with the network to transmit and receive data with the network. By performing a procedure for establishing an RRC connection, an RRC connection may be established between the UE and the network. Based on the establishment of an RRC connection, the RRC state may change from the RRC_IDLE state to the RRC _CONNECTED state.

In 5G, the RRC_INACTIVE state was defined in addition to the RRC_CONNECTED state and RRC_IDLE state in LTE. In the RRC_INACTIVE state, an RRC connection may not be established between the UE and the network. However, unlike the RRC_IDLE state, in the RRC _INACTIVE state, each of the UE and the network may store required information to establish an RRC connection. The UE may store access stratum (AS) context identification information (AS context ID) to activate the information. The UE may be registered with the core network. The time to resume an RRC connection may be shorter than the time to establish an RRC connection in the RRC_IDLE state, and the UE may return to the RRC_CONNECTED state more quickly than when it is in the RRC_IDLE state.

The UE may change the RRC state from the RRC_CONNECTED state to RRC_IDLE state or RRC_INACTIVE state as the RRC inactivity timer expires. Even in a state where data transmission and/or reception is not scheduled for the time being, an RRC state change, e.g., RRC connection release, was possible only when the RRC inactivity timer expired.

### [Detailed Description of the Invention]

### [Technical Problem]

The 3^{rd} generation partnership project (3GPP) release-16 defined the preferredRRC-State information element (IE) for the UEAssistanceInformation message for rapid RRC connection release. The preferredRRC-State information element may include the RRC state desired by the UE. For example, if the UE wants to release the RRC connection before the RRC inactivity timer expires and enter the RRC_IDLE state, the UE may transmit a UEAssistanceInformation message containing the preferredRRC-State information element with the value of the RRC_IDLE state to the network. The network may transmit, to the UE, an RRC release message that causes a change to the RRC_IDLE state based on the value of the RRC_IDLE state of the preferredRRC-State information element included in the UEAssistanceInformation message. However, 3GPP REL-16 defined only the preferredRRC-State information element but did not what conditions the UE used the preferredRRC-State information element under. When the UE performs rapid RRC release according to the preferredRRC-State information element even in situations where data transmission and/or reception is expected, power and/or resources may be wasted as the RRC connection is performed for a short period of time.

An electronic device and operation method thereof according to various embodiments may perform rapid RRC release using the preferredRRC-State information element when conditions for rapid RRC release are met.

### [Technical Solution]

According to various embodiments, an electronic device may comprise at least one processor. The at least one processor may be configured to identify expiration of a first timer having an expiration time shorter than an RRC inactivity timer set by a network in an RRC_CONNECTED state and identify whether a UEAssistanceInformation message including a preferredRRC-State information element is transmittable based on expiration of the first timer. When the UEAssistanceInformation message including the preferredRRC-State information element is not transmittable, the at least one processor may be configured to identify whether the RRC inactivity timer starting simultaneously with the first timer expires and change an RRC state from the RRC_CONNECTED state to an RRC_INACTIVE state or an RRC_IDLE state based on expiration of the RRC inactivity timer. When the UEAssistanceInformation message including the preferredRRC-State information element is transmittable, the at least one processor may be configured to transmit, to the network, the UEAssistanceInformation message including the preferredRRC-State information element for causing the change of the RRC state from the RRC_CONNECTED state to the RRC_INACTIVE state or the RRC_IDLE state.

According to various embodiments, a method for operating a network may comprise entering an RRC _CONNECTED state by establishing an RRC connection with an electronic device, receiving a UEAssistanceInformation message including a preferredRRC-State information element from the electronic device, changing an RRC state from the RRC_CONNECTED state to an RRC_INACTIVE state or an RRC_IDLE state by releasing the RRC connection based on a value of the preferredRRC-State information element corresponding to a designated value, changing the RRC state to the RRC _CONNECTED state by establishing or resuming the RRC connection based on receiving a message for requesting to establish or resume the RRC connection from the electronic device, and transmitting, to the electronic device, an RRC release message for releasing the RRC connection based on detecting an event for releasing the RRC connection in the RRC_CONNECTED state.

According to various embodiments, a method for operating an electronic device may comprise identifying expiration of a first timer having an expiration time shorter than an RRC inactivity timer set by a network in an RRC _CONNECTED state and identifying whether a UEAssistanceInformation message including a preferredRRC-State information element is transmittable based on expiration of the first timer. The method for operating the electronic device may further comprise, when the UEAssistanceInformation message including the preferredRRC-State information element is not transmittable, identifying whether the RRC inactivity timer starting simultaneously with the first timer expires and changing an RRC state from the RRC_CONNECTED state to an RRC INACTIVE state or an RRC_lDLE state based on expiration of the RRC inactivity timer. The method for operating the electronic device may further comprise, when the UEAssistanceInformation message including the preferredRRC-State information element is transmittable, transmitting, to the network, the UEAssistanceInformation message including the preferredRRC-State information element for causing the change of the RRC state from the RRC_CONNECTED state to the RRC INACTIVE state or the RRC_IDLE state.

### [Advantageous Effects]

According to various embodiments, there may be provided an electronic device and operation method thereof that may perform rapid RRC release using the preferredRRC-State information element when conditions for rapid RRC release are met. Accordingly, rapid RRC release using the preferredRRC-State information element indiscriminately may be prevented, thereby preventing waste of power and/or resources.

### [Brief Description of Drawings]

FIG. 1 is a view illustrating an electronic device in a network environment according to various embodiments;
FIG. 2A is a block diagram illustrating an electronic device for supporting legacy network communication and 5G network communication according to various embodiments;
FIG. 2B is a block diagram illustrating an electronic device for supporting legacy network communication and 5G network communication according to various embodiments;
FIG. 4 is a view illustrating an RRC state change according to various embodiments;

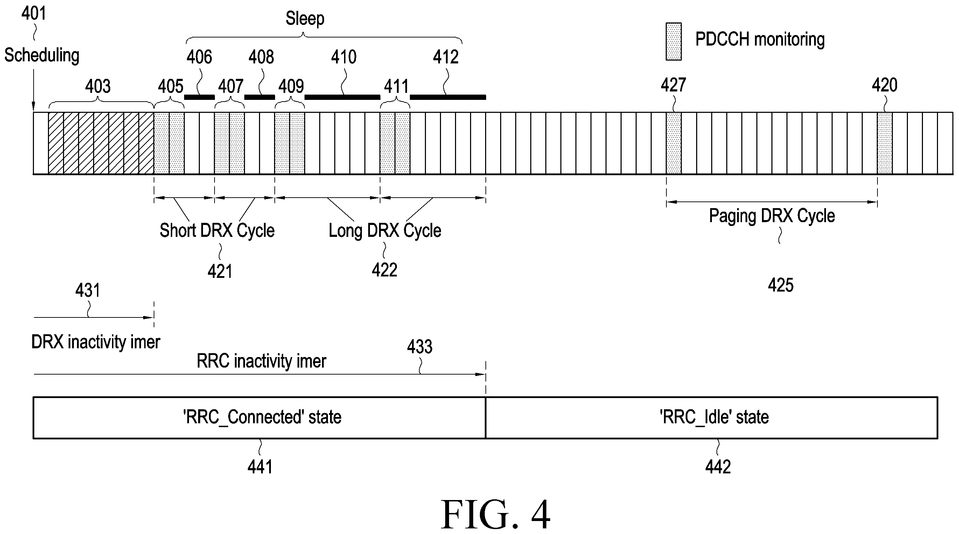

FIG. 4 is a view illustrating operations of an electronic device based on a timer according to various embodiments;

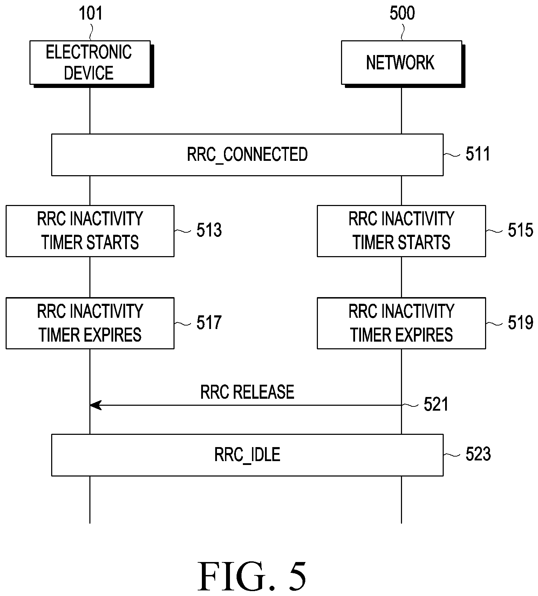

FIG. 5 is a view illustrating an operation method of an electronic device and a network according to various embodiments;

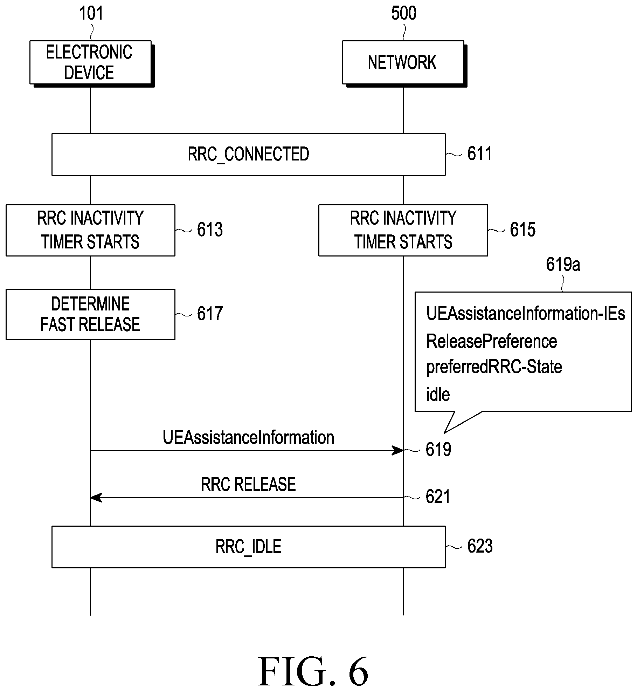

FIG. 6 is a view illustrating an operation method of an electronic device and a network according to various embodiments;

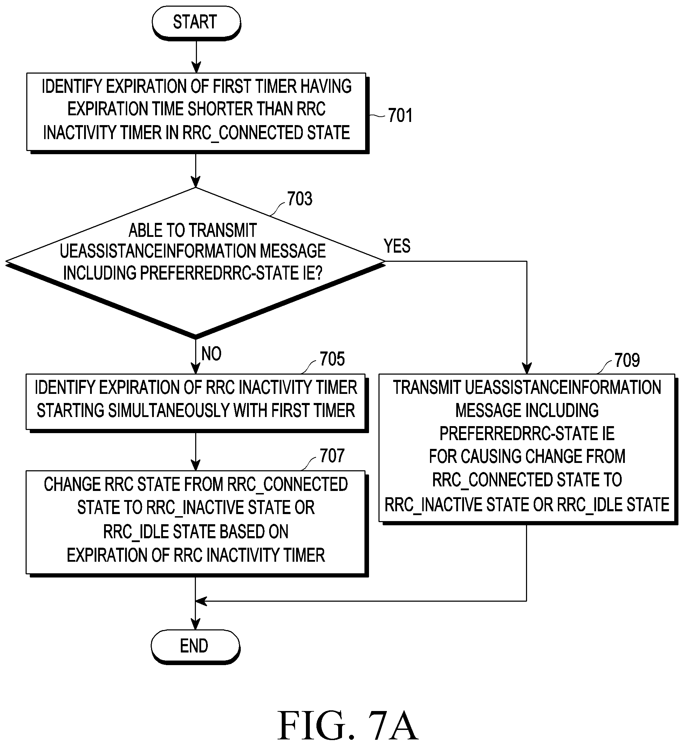

FIG. 7A is a view illustrating an operation method of an electronic device according to various embodiments;

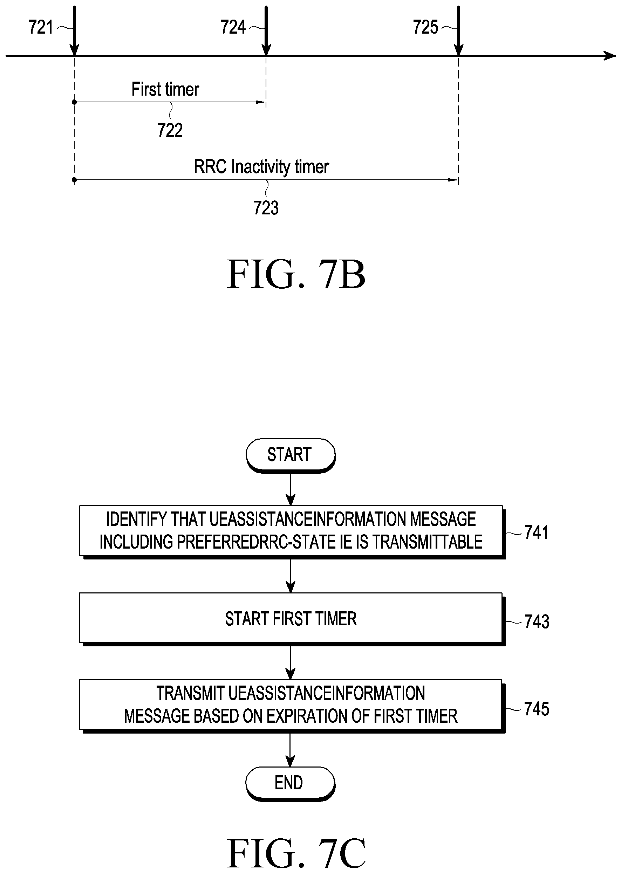

FIG. 7B is a view illustrating expiration of timers according to various embodiments;
FIG. 7C is a view illustrating an operation method of an electronic device according to various embodiments;

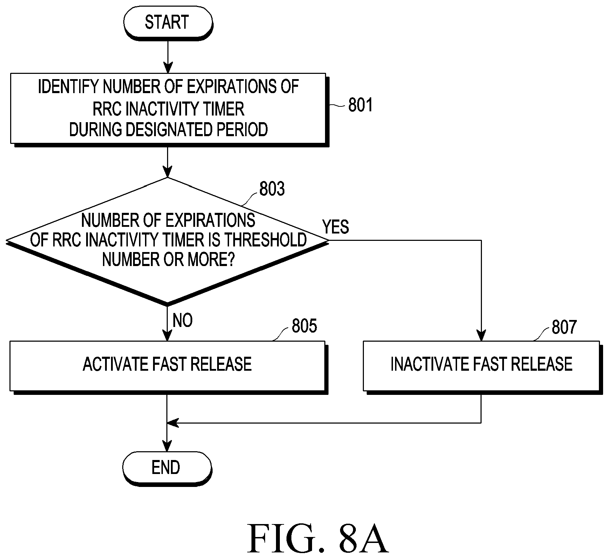

FIG. 8A is a view illustrating an operation method of an electronic device according to various embodiments;

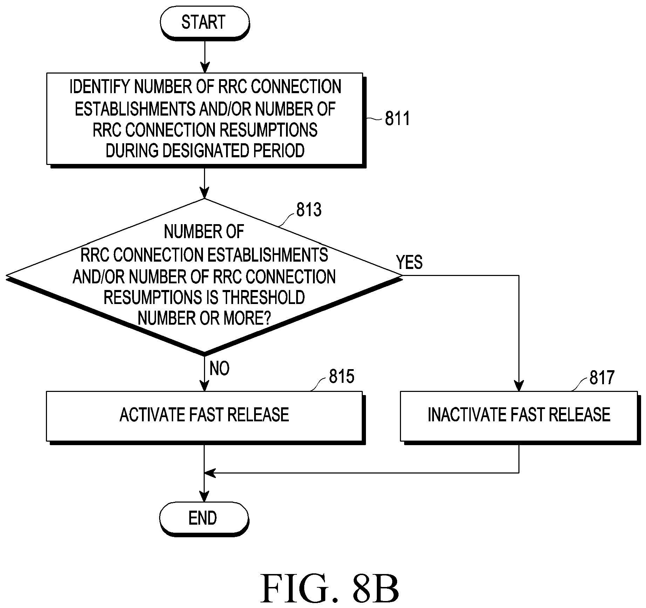

FIG. 8B is a view illustrating an operation method of an electronic device according to various embodiments;

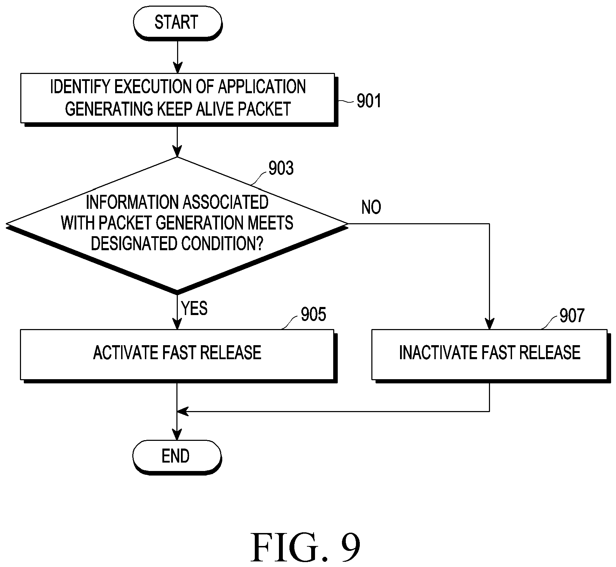

FIG. 9 is a view illustrating an operation method of an electronic device according to various embodiments;

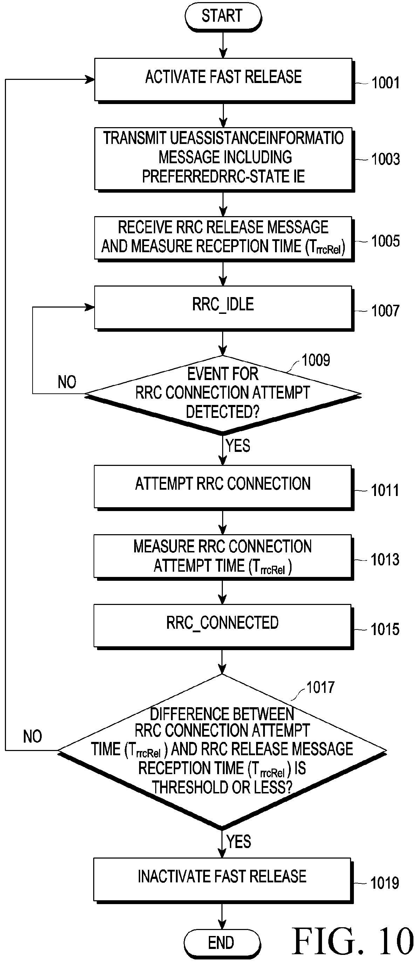

FIG. 10 is a view illustrating an operation method of an electronic device according to various embodiments;

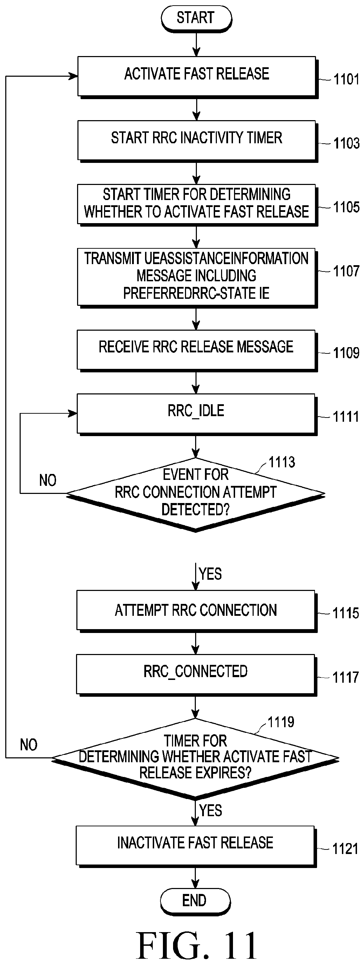

FIG. 11 is a view illustrating an operation method of an electronic device according to various embodiments;

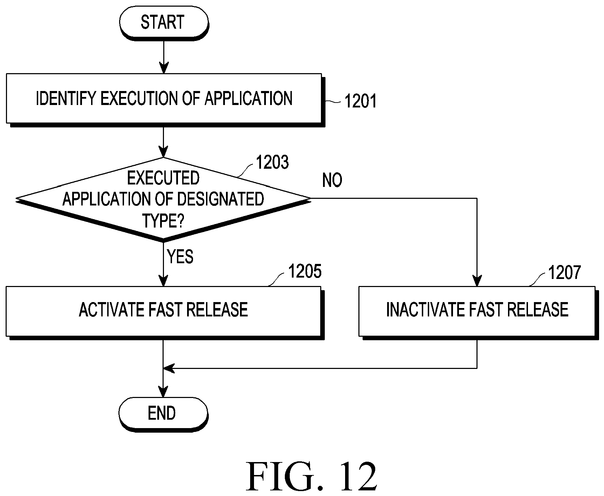

FIG. 12 is a view illustrating an operation method of an electronic device according to various embodiments;

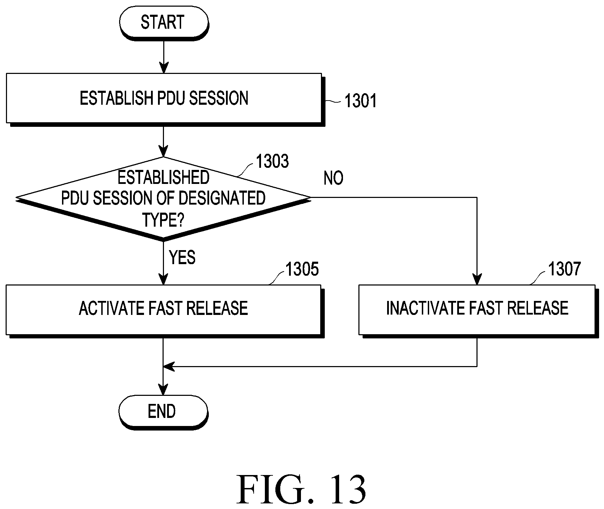

FIG. 13 is a view illustrating an operation method of an electronic device according to various embodiments;

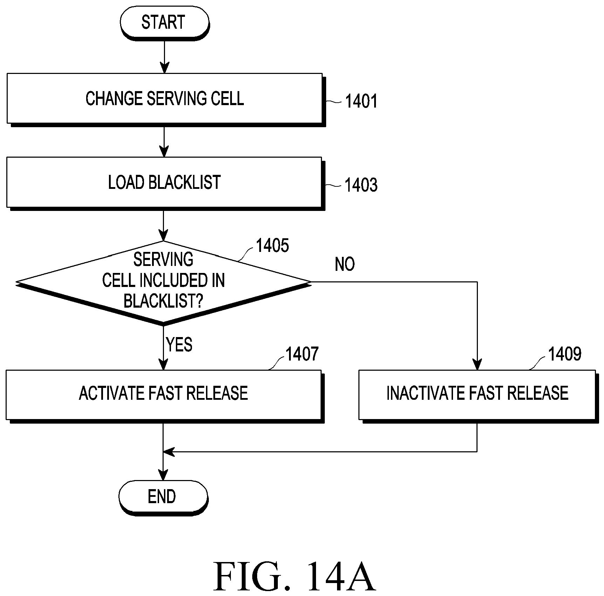

FIG. 14A is a view illustrating an operation method of an electronic device according to various embodiments;

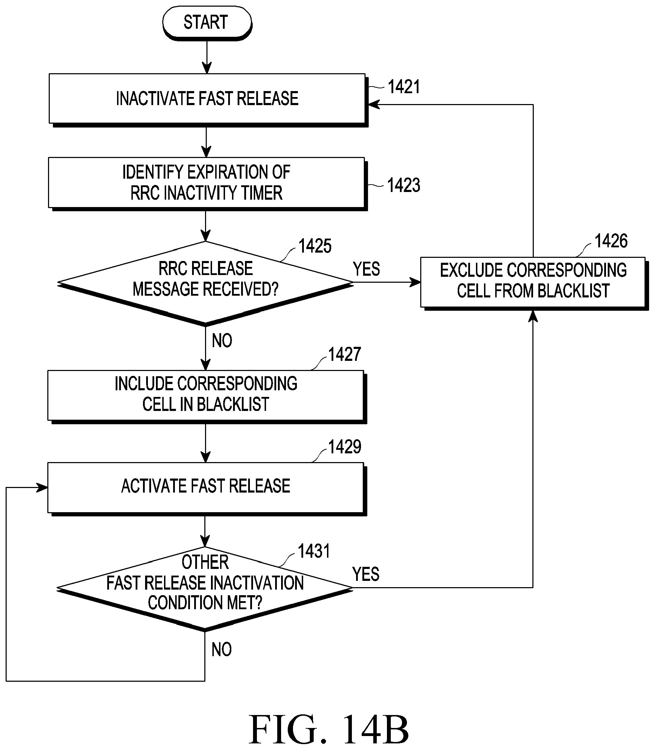

FIG. 14B is a view illustrating an operation method of an electronic device according to various embodiments;

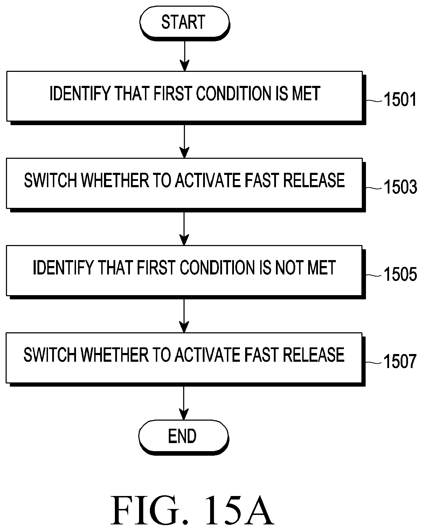

FIG. 15A is a view illustrating an operation method of an electronic device according to various embodiments;

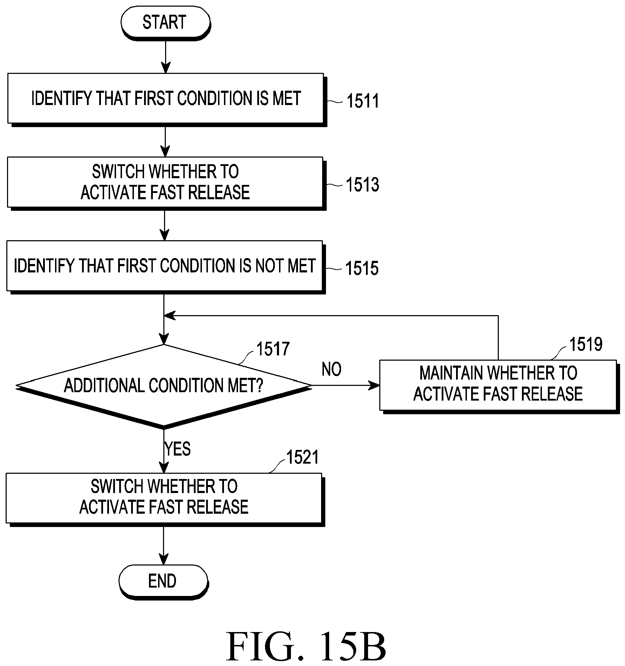

FIG. 15B is a view illustrating an operation method of an electronic device according to various embodiments;

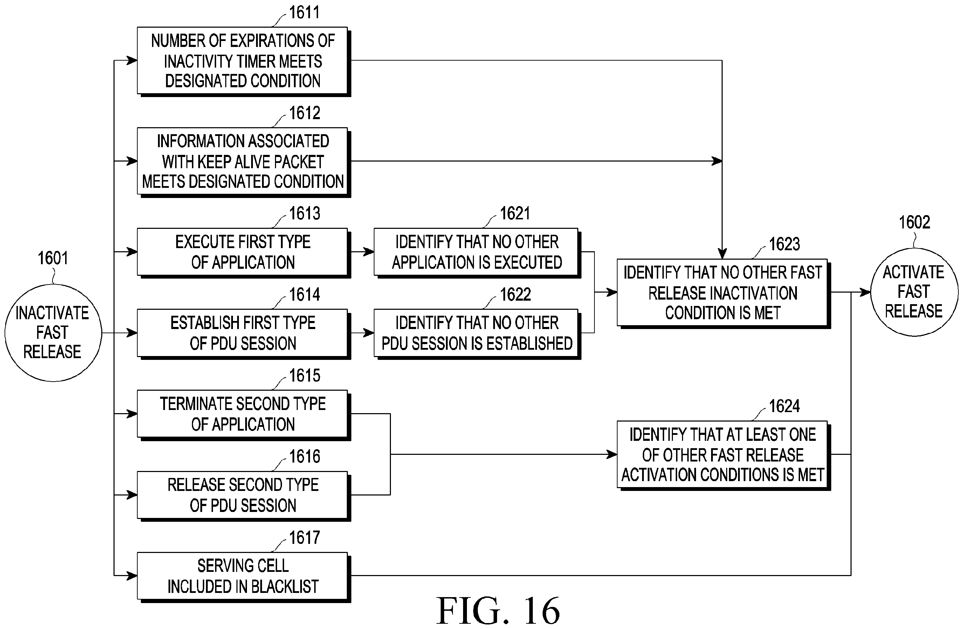

FIG. 16 is a view illustrating activation of rapid release of an electronic device according to various embodiments;

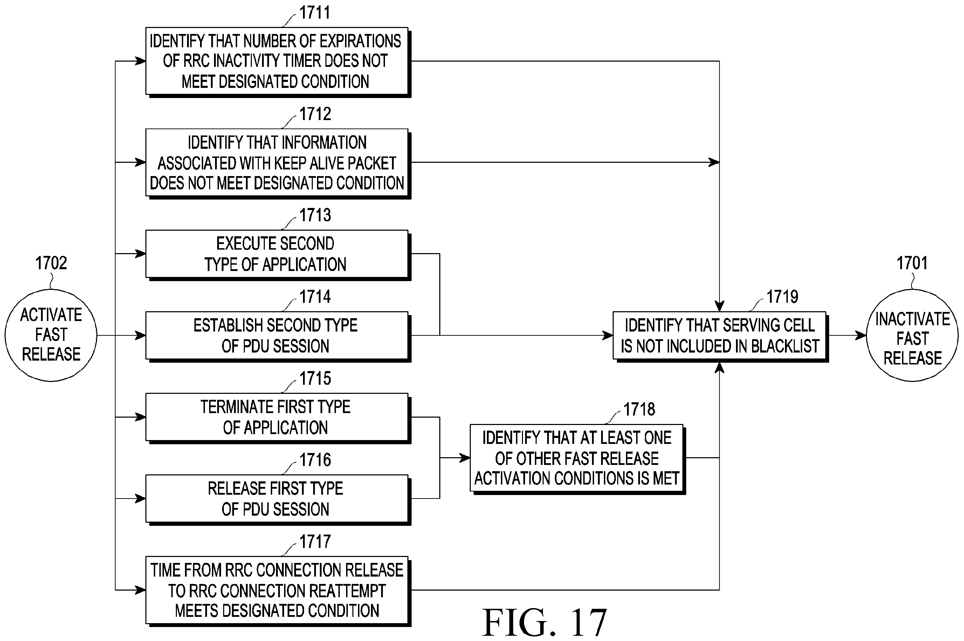

FIG. 17 is a view illustrating activation of rapid release of an electronic device according to various embodiments;

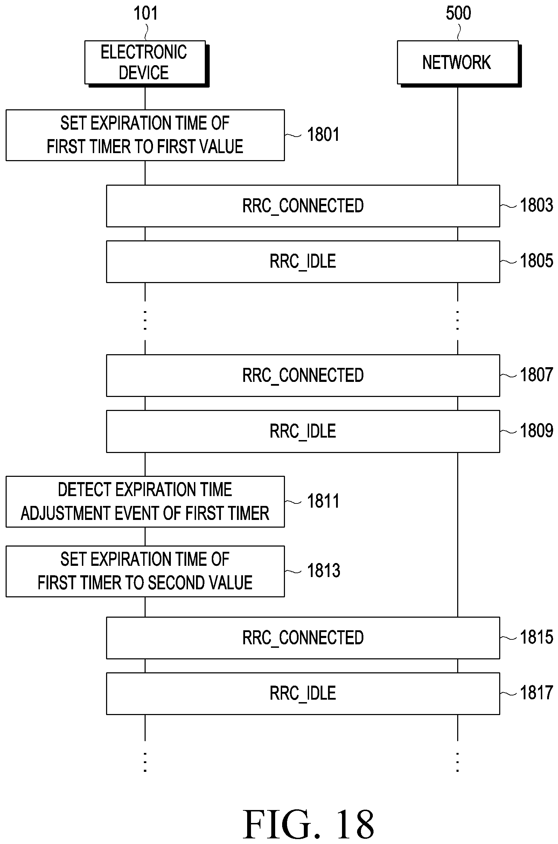

FIG. 18 is a view illustrating an operation method of an electronic device according to various embodiments;

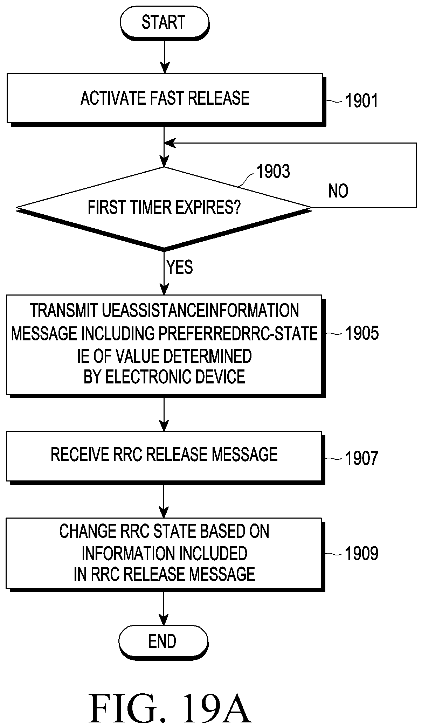

FIG. 19A is a view illustrating an operation method of an electronic device according to various embodiments;

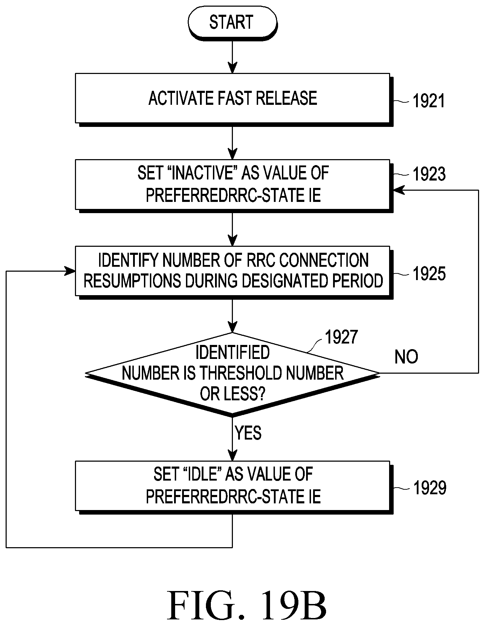

FIG. 19B is a view illustrating an operation method of an electronic device according to various embodiments;

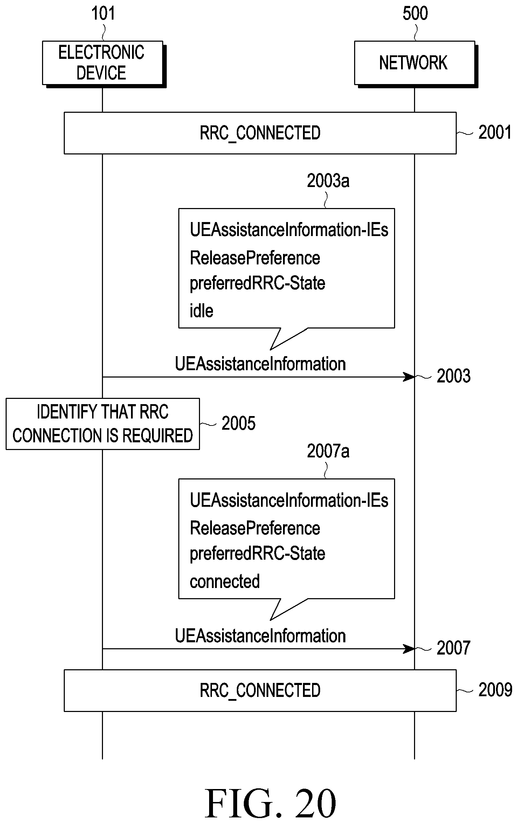

FIG. 20 is a view illustrating an operation method of an electronic device according to various embodiments; and

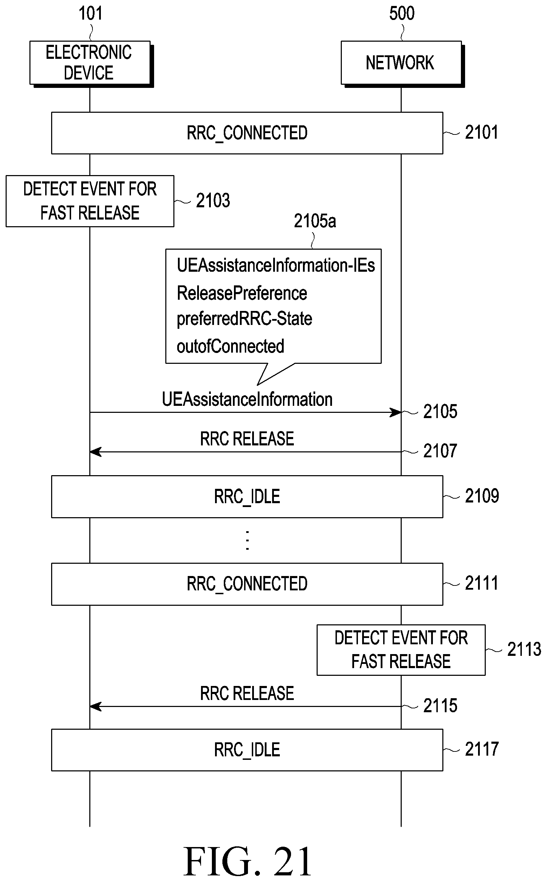

FIG. 21 is a view illustrating an operation method of an electronic device according to various embodiments.

### [Mode for Carrying out the Invention]

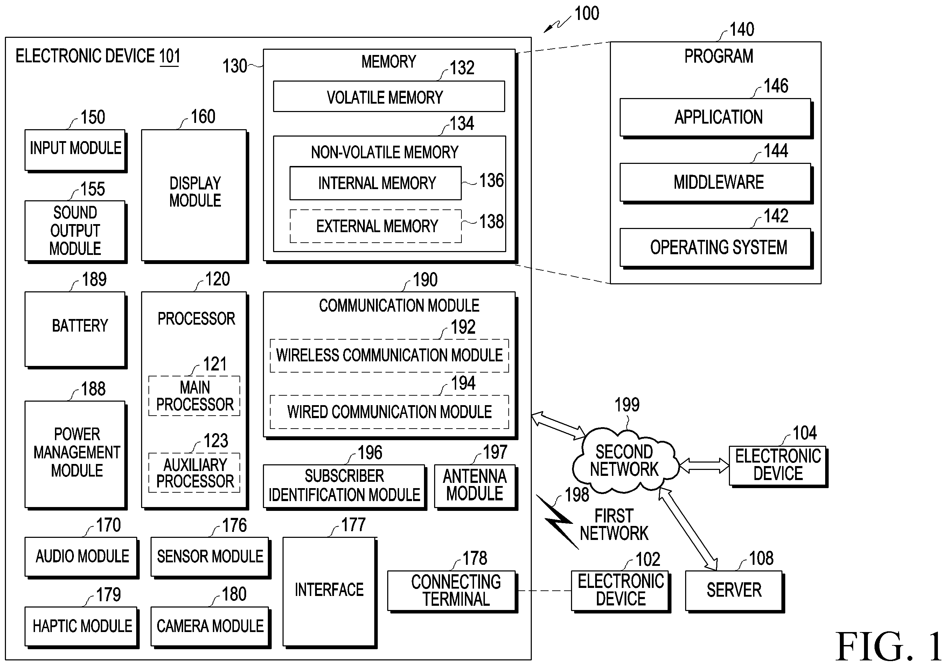

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal According to an embodiment, the display module 160 may include a first display module 351 corresponding to the user's left eye and/or a second display module 353 corresponding to the user's right eye., a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as BluetoothTM, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

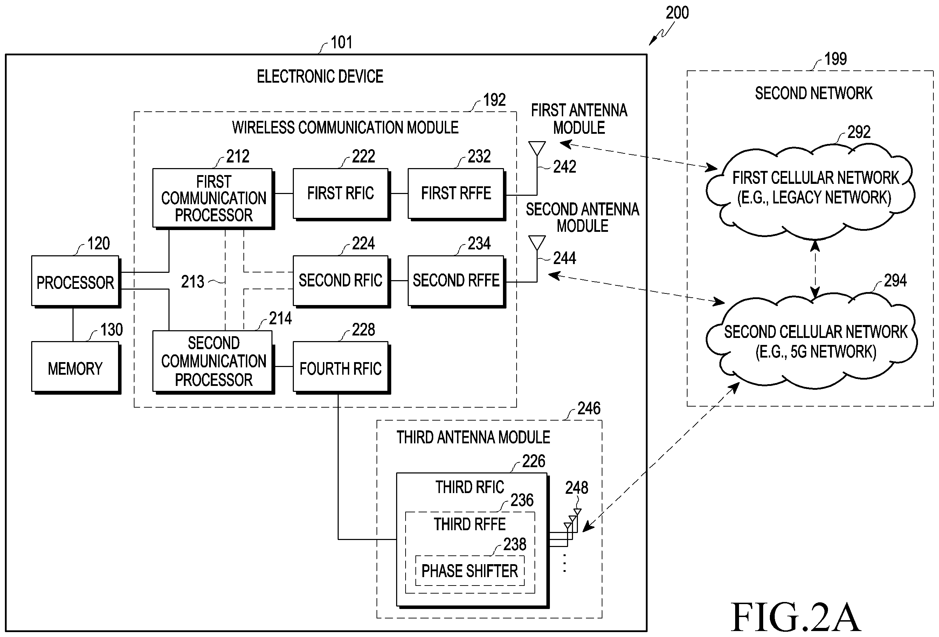

FIG. 2A is a block diagram 200 illustrating an electronic device 101 for supporting legacy network communication and 5G network communication according to various embodiments. Referring to FIG. 2A, the electronic device 101 may include a first communication processor 212, a second communication processor 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, a third antenna module 246, and antennas 248. The electronic device 101 may further include a processor 120 and a memory 130. The second network 199 may include a first cellular network 292 and a second cellular network 294. According to an embodiment, the electronic device 101 may further include at least one component among the components of FIG. 1, and the second network 199 may further include at least one other network. According to an embodiment, the first communication processor 212, the second communication processor 214, the first RFIC 222, the second RFIC 224, the fourth RFIC 228, the first RFFE 232, and the second RFFE 234 may form at least part of the wireless communication module 192. According to another embodiment, the fourth RFIC 228 may be omitted or be included as part of the third RFIC 226.

The first communication processor 212 may establish a communication channel of a band that is to be used for wireless communication with the first cellular network 292 or may support legacy network communication via the established communication channel. According to various embodiments, the first cellular network may be a legacy network that includes second generation (2G), third generation (3G), fourth generation (4G), or long-term evolution (LTE) networks. The second CP 214 may establish a communication channel corresponding to a designated band (e.g., from about 6GHz to about 60GHz) among bands that are to be used for wireless communication with the second cellular network 294 or may support fifth generation (5G) network communication via the established communication channel. According to an embodiment, the second cellular network 294 may be a 5G network defined by the 3rd generation partnership project (3GPP). Additionally, according to an embodiment, the first CP 212 or the second CP 214 may establish a communication channel corresponding to another designated band (e.g., about 6GHz or less) among the bands that are to be used for wireless communication with the second cellular network 294 or may support fifth generation (5G) network communication via the established communication channel.

The first communication processor 212 may perform data transmission/reception with the second communication processor 214. For example, data classified as transmitted via the second cellular network 294 may be changed to be transmitted via the first cellular network 292. In this case, the first communication processor 212 may receive transmission data from the second communication processor 214. For example, the first communication processor 212 may transmit/receive data to/from the second communication processor 214 via an inter-processor interface 213. The inter-processor interface 213 may be implemented as, e.g., universal asynchronous receiver/transmitter (UART) (e.g., high speed-UART (HS-UART)) or peripheral component interconnect bus express (PCIe) interface, but is not limited to a specific kind. The first communication processor 212 and the second communication processor 214 may exchange packet data information and control information using, e.g., a shared memory. The first communication processor 212 may transmit/receive various types of information, such as sensing information, information about output strength, and resource block (RB) allocation information, to/from the second communication processor 214.

According to implementation, the first communication processor 212 may not be directly connected with the second communication processor 214. In this case, the first communication processor 212 may transmit/receive data to/from the second communication processor 214 via a processor 120 (e.g., an application processor). For example, the first communication processor 212 and the second communication processor 214 may transmit/receive data to/from the processor 120 (e.g., an application processor) via an HS-UART interface or PCIe interface, but the kind of the interface is not limited thereto. The first communication processor 212 and the second communication processor 214 may exchange control information and packet data information with the processor 120 (e.g., an application processor) using a shared memory.

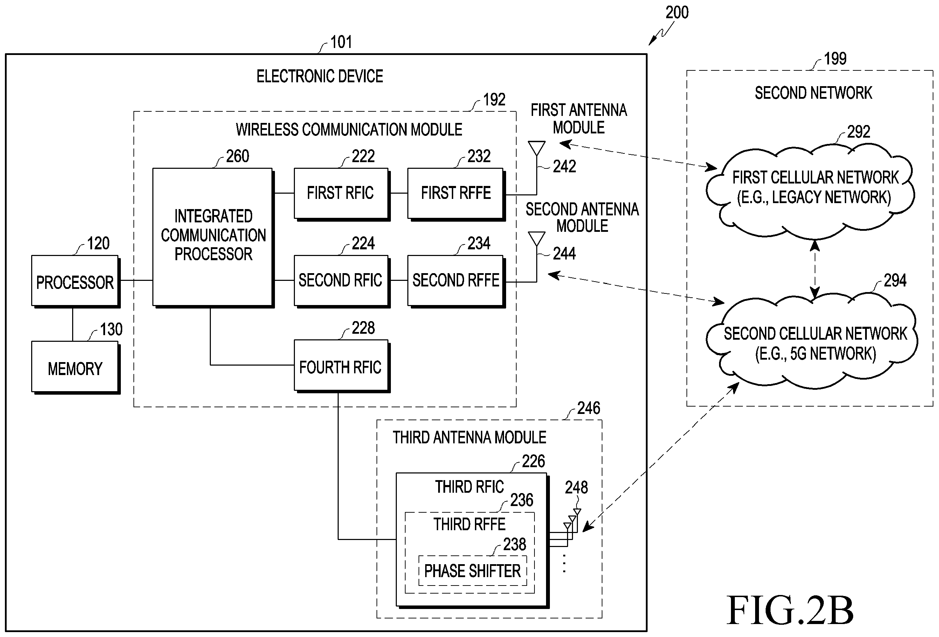

According to an embodiment, the first communication processor 212 and the second communication processor 214 may be implemented in a single chip or a single package. According to an embodiment, the first CP 212 or the second CP 214, along with the processor 120, an assistance processor 123, or communication module 190, may be formed in a single chip or single package. For example, as shown in FIG. 2B, a communication processor 440 may support all of the functions for communication with the first cellular network 292 and the second cellular network 294.

Upon transmission, the first RFIC 222 may convert a baseband signal generated by the first communication processor 212 into a radio frequency (RF) signal with a frequency ranging from about 700MHz to about 3GHz which is used by the first cellular network 292 (e.g., a legacy network). Upon receipt, the RF signal may be obtained from the first network 292 (e.g., a legacy network) through an antenna (e.g., the first antenna module 242) and be pre-processed via an RFFE (e.g., the first RFFE 232). The first RFIC 222 may convert the pre-processed RF signal into a baseband signal that may be processed by the first communication processor 212.

Upon transmission, the second RFIC 224 may convert the baseband signal generated by the first communication processor 212 or the second communication processor 214 into a Sub6-band (e.g., about 6GHz or less) RF signal (hereinafter, "5G Sub6 RF signal") that is used by the second cellular network 294 (e.g., a 5G network). Upon receipt, the 5G Sub6 RF signal may be obtained from the second cellular network 294 (e.g., a 5G network) through an antenna (e.g., the second antenna module 244) and be pre-processed via an RFFE (e.g., the second RFFE 234). The second RFIC 224 may convert the pre-processed 5G Sub6 RF signal into a baseband signal that may be processed by a corresponding processor of the first communication processor 212 and the second communication processor 214.

The third RFIC 226 may convert the baseband signal generated by the second CP 214 into a 5G Above6 band (e.g., from about 6GHz to about 60GHz) RF signal (hereinafter, "5G Above6 RF signal") that is to be used by the second cellular network 294 (e.g., a 5G network). Upon receipt, the 5G Above6 RF signal may be obtained from the second cellular network 294 (e.g., a 5G network) through an antenna (e.g., the antenna 248) and be pre-processed via the third RFFE 236. The third RFIC 226 may convert the pre-processed 5G Above6 RF signal into a baseband signal that may be processed by the second communication processor 214. According to an embodiment, the third RFFE 236 may be formed as part of the third RFIC 226.

According to an embodiment, the electronic device 101 may include the fourth RFIC 228 separately from, or as at least part of, the third RFIC 226. In this case, the fourth RFIC 228 may convert the baseband signal generated by the second communication processor 214 into an intermediate frequency band (e.g., from about 9GHz to about 11GHz) RF signal (hereinafter, "IF signal") and transfer the IF signal to the third RFIC 226. The third RFIC 226 may convert the IF signal into a 5G Above6 RF signal. Upon receipt, the 5G Above6 RF signal may be received from the second cellular network 294 (e.g., a 5G network) through an antenna (e.g., the antenna 248) and be converted into an IF signal by the third RFIC 226. The fourth RFIC 228 may convert the IF signal into a baseband signal that may be processed by the second communication processor 214.

According to an embodiment, the first RFIC 222 and the second RFIC 224 may be implemented as at least part of a single chip or single package. According to various embodiments, when the first RFIC 222 and the second RFIC 224 in FIG. 2A or 2B are implemented as a single chip or a single package, they may be implemented as an integrated RFIC. In this case, the integrated RFIC is connected to the first RFFE 232 and the second RFFE 234 to convert a baseband signal into a signal of a band supported by the first RFFE 232 and/or the second RFFE 234, and may transmit the converted signal to one of the first RFFE 232 and the second RFFE 234. According to an embodiment, the first RFFE 232 and the second RFFE 234 may be implemented as at least part of a single chip or single package. According to an embodiment, at least one of the first antenna module 242 or the second antenna module 244 may be omitted or be combined with another antenna module to process multi-band RF signals.

According to an embodiment, the third RFIC 226 and the antenna 248 may be disposed on the same substrate to form the third antenna module 246. For example, the wireless communication module 192 or the processor 120 may be disposed on a first substrate (e.g., a main painted circuit board (PCB)). In this case, the third RFIC 226 and the antenna 248, respectively, may be disposed on one area (e.g., the bottom) and another (e.g., the top) of a second substrate (e.g., a sub PCB) which is provided separately from the first substrate, forming the third antenna module 246. Placing the third RFIC 226 and the antenna 248 on the same substrate may shorten the length of the transmission line therebetween. This may reduce a loss (e.g., attenuation) of high-frequency band (e.g., from about 6GHz to about 60GHz) signal used for 5G network communication due to the transmission line. Thus, the electronic device 101 may enhance the communication quality with the second network 294 (e.g., a 5G network).

According to an embodiment, the antenna 248 may be formed as an antenna array which includes a plurality of antenna elements available for beamforming. In this case, the third RFIC 226 may include a plurality of phase shifters 238 corresponding to the plurality of antenna elements, as part of the third RFFE 236. Upon transmission, the plurality of phase shifters 238 may change the phase of the 5G Above6 RF signal which is to be transmitted to the outside (e.g., a 5G network base station) of the electronic device 101 via their respective corresponding antenna elements. Upon receipt, the plurality of phase shifters 238 may change the phase of the 5G Above6 RF signal received from the outside to the same or substantially the same phase via their respective corresponding antenna elements. This enables transmission or reception via beamforming between the electronic device 101 and the outside.

The second cellular network 294 (e.g., a 5G network) may be operated independently (e.g., as standalone (SA)) from, or in connection (e.g., as non-standalone (NSA)) with the first cellular network 292 (e.g., a legacy network). For example, the 5G network may have the access network (e.g., 5G radio access network (RAN) or next generation RAN (NG RAN)) but may not have the core network (e.g., next generation core (NGC)). In this case, the electronic device 101, after accessing a 5G network access network, may access an external network (e.g., the Internet) under the control of the core network (e.g., the evolved packet core (EPC)) of the legacy network. Protocol information (e.g., LTE protocol information) for communication with the legacy network or protocol information (e.g., New Radio (NR) protocol information) for communication with the 5G network may be stored in the memory 230 and be accessed by other components (e.g., the processor 120, the first communication processor 212, or the second communication processor 214).

According to various embodiments, at least one (or at least some) of the processor 120, the first communication processor 212, the second communication processor 214, or the integrated communication processor 260 may be implemented as an integrated circuit including a storage circuit for storing at least one instruction for performing operations described below and at least one computation circuit executing at least one instruction.

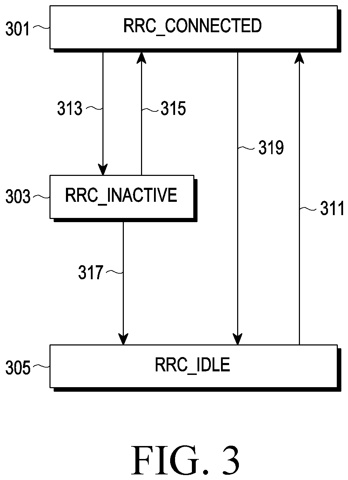

FIG. 3 is a view illustrating an RRC state change according to various embodiments.

According to an embodiment, an electronic device 101 (e.g., at least one of the processor 120, the first communication processor 212, the second communication processor 214, or the integrated communication processor 260) may be in the RRC_IDLE state 305. In the RRC_IDLE state, an RRC connection is not established between the electronic device 101 and the network. The network may manage the location of the user device on a per-tracking area (TA) basis. The electronic device 101 is not registered with the core network. When data to be transmitted is generated (e.g., when a request from an upper layer is identified), the electronic device 101 may perform a procedure for changing the RRC state 311 to the RRC_CONNECTED state 301. Alternatively, the electronic device 101 may monitor whether there is data (e.g., a paging message) to be transmitted to the electronic device 101 in the RRC_IDLE state 305. If there is data to be transmitted to the electronic device 101, the electronic device 101 may perform a procedure for changing the RRC state 311 to the RRC _CONNECTED state 301. For example, the electronic device 101 may transmit an RRC setup request message to the network. The network may transmit an RRC setup message to the electronic device 101 in response to the RRC setup request message. The electronic device 101 may transmit an RRC setup complete message corresponding to the RRC setup message to the network. Based at least on the above-described procedure, an RRC connection may be established between the electronic device 101 and the network, and may follow, e.g., 3GPP TS 38.331, but is not limited thereto.

According to various embodiments, the electronic device 101 may be in the RRC_CONNECTED state 301. In the RRC_CONNECTED state, an RRC connection may be established between the electronic device 101 and the network. For example, the electronic device 101 may be in the RRC _CONNECTED state 301 according to the RRC state change 311 from the RRC_IDLE state 305. In the RRC_CONNECTED state 301, an RRC connection may be established between the electronic device 101 and the network. The electronic device 101 may transmit and/or receive data to and from the network based on the RRC connection.

According to various embodiments, the electronic device 101 may receive an RRC release message in the RRC_CONNECTED state 301. In one example, a suspendConfig information element may be included in the RRC release message. The electronic device 101 may perform the RRC state change 313 from the RRC _CONNECTED state 301 to the RRC_INACTIVE state 303, based on identification of the suspendConfig information element included in the release message. The suspendConfig information element may indicate a configuration for the RRC_INACTIVE state 303. Alternatively, the electronic device 101 may perform an RRC state change 319 from the RRC_CONNECTED state 301 to the RRC_IDLE state 305, based on reception of the RRC release message that does not include the suspendConfig information element (or where the suspendConfig information element is not configured). Alternatively, the electronic device 101 may perform the RRC state change 317 from the RRC_INACTIVE state 303 to the RRC_IDLE state 305, based on reception of the RRC release message that does not include the suspendConfig information element.

According to various embodiments, in the RRC _INACTIVE state 303, an RRC connection may not be established between the electronic device 101 and the network. However, unlike in the RRC_IDLE state 305, in the RRC_INACTIVE state 303, each of the electronic device 101 and the network may store information required to establish an RRC connection. The electronic device may store access stratum (AS) context identification information (AS context ID) for activating the corresponding information. The electronic device 101 may be registered with the core network. The electronic device 101 may perform the RRC state change 315 from the RRC_INACTIVE state 303 to the RRC_CONNECTED state 301. For example, the electronic device 101 may transmit an RRC resume request message to the network. The network may transmit an RRC resume message corresponding to the RRC resume request message to the electronic device 101. The electronic device 101 may transmit an RRC resume complete message corresponding to the RRC resume message. Alternatively, the network may transmit an RRC setup message corresponding to the RRC resume request message to the electronic device 101. The electronic device 101 may transmit an RRC setup complete message corresponding to the RRC setup message. Based on at least some of the above-described processes, RRC connection between the electronic device 101 and the network may be resumed.

FIG. 4 is a view illustrating operations of an electronic device based on a timer according to various embodiments.

According to various embodiments, an electronic device 101 (e.g., at least one of the processor 120, the first communication processor 212, the second communication processor 214, or the integrated communication processor 260) may identify scheduling 401 of the RRC_CONNECTED state 441 transmission data and/or reception data. The electronic device 101 may start the DRX inactivity timer 431 and the RRC inactivity timer 432 based on the scheduling 401 of the transmission data and/or the reception data. For example, the DRX inactivity timer 431 and/or the RRC inactivity timer 432 may be started or restarted based on reception of the MAC SDU and/or transmission of the MAC SDU, but this is exemplary and the event of the start (or restart) is not limited. For example, the electronic device 101 may identify scheduling 401 based on reception of the DL grant. After the DRX inactivity timer 431 and the RRC inactivity timer 432 are started, if scheduling of another transmission data and/or reception data is identified, the electronic device 101 may restart the DRX inactivity timer 431 and the RRC inactivity timer 432. For example, scheduling of transmission data and/or reception data may be a start condition of the DRX inactivity timer 431 and the RRC inactivity timer 432. The expiration time of the RRC inactivity timer 432 may be greater than the expiration time of the DRX inactivity timer 431. The electronic device 101 may receive the scheduled (401) data (403).

Based on expiration of the DRX inactivity timer 431, the electronic device 101 may enter a connected discontinuous reception mode (C-DRX mode). In the C-DRX mode, the electronic device 101 may wake up to monitor the PDCCH in the on-duration 405, 407, 409, and 411 in the RRC_CONNECTED state 441. In the C-DRX mode, the electronic device 101 may be in a sleep state in the sleep sections 406, 408, 410, and 412. The sleep state may be a state in which power consumption is small, resource use is small, and/or functions to be performed are small compared to the wake-up state, but is not limited thereto. For example, the electronic device 101 may wake up in on-duration 405 and 407 of at least a portion of a short DRX cycle. The electronic device 101 may wake up in on-duration 409 and 411 of at least a portion of a long DRX cycle. The lengths of the sleep sections 410 and 412 during the long DRX cycle may be longer than the lengths of the sleep sections 406 and 408 during the short DRX cycle. For example, the electronic device 101 may wake up more frequently in the short DRX cycle than in the long DRX cycle.

Even in the C-DRX state, the RRC inactivity timer 433 may expire in a state in which transmission data and/or reception data are not scheduled. The electronic device 101 may enter a discontinuous reception mode (DRX mode) (or an idle-DRX mode (I-DRX mode)) based on the RRC inactivity timer 433. For example, the electronic device 101 may change the RRC state from the RRC_CONNCTED state 441 to the RRC_IDLE state 442. Alternatively, the electronic device 101 may change the RRC state from, e.g., the RRC_CONNCTED state to the RRC _INACTIVE state. The RRC state changed according to the expiration of the RRC inactivity timer 433 is not limited. The electronic device 101 may wake up during the on-duration 427, which is a part of the paging DRX cycle 425, to monitor the PDCCH, and may be in a sleep state in the remaining sleep sections. The paging DRX cycle may be longer than a cycle (e.g., a short DRX cycle and a long DRX cycle) in the C-DRX mode. After the paging DRX cycle 425, the electronic device 101 may wake up again during the on-duration 428 to monitor the PDCCH. Information related to the DRX configuration may be included in the RRC reconfiguration message. As described above, the electronic device 101 may first enter the C-DRX mode, and may enter the RRC_IDLE state 442 based on expiration of the RRC inactivity timer 433. However, if the electronic device 101 does not need to maintain the RRC connection, the electronic device 101 preferably needs to enter the RRC_IDLE state 442 (or RRC_INACITVE state) even before the RRC inactivity timer 433 expires. Accordingly, the electronic device 101 may change the RRC state even before the RRC inactivity timer 433 expires by transmitting the UEAssistanceInformation message including the information element of preferredRRC-State to the network, which is described with reference to FIGS. 5 and 6.

FIG. 5 is a view illustrating an operation method of an electronic device and a network according to various embodiments.

According to an embodiment, an electronic device 101 (e.g., at least one of the processor 120, the first communication processor 212, the second communication processor 214, or the integrated communication processor 260) and a network 500 may be in the RRC_CONNECTED state in operation 511. Data may be transmitted and/or received based on an RRC connection established between the electronic device 101 and the network 500. The electronic device 101 may start the RRC inactivity timer in operation 513. There is no limit to the start event of the RRC inactivity timer. In operation 515, the network 500 may start the RRC inactivity timer. After the RRC inactivity timer starts, transmission data and/or reception data may not be additionally identified (or generated). As the transmission data and/or the reception data are not additionally identified, the electronic device 101 may identify the expiration of the RRC inactivity timer in operation 517. The network 500 may enable the RRC inactivity timer to expire in operation 519. Based on the expiration of the RRC inactivity timer, the network 500 may transmit an RRC release message to the electronic device 101 in operation 521. In operation 523, the electronic device 101 may enter the RRC_IDLE state based on reception of the RRC release message. If the RRC release message including the suspendConfig information element is received, the electronic device 101 may enter the RRC_INACTIVE state. As described above, the electronic device 101 must wait until the RRC inactivity timer expires to change the RRC state.

FIG. 6 is a view illustrating an operation method of an electronic device and a network according to various embodiments.

According to an embodiment, an electronic device 101 (e.g., at least one of the processor 120, the first communication processor 212, the second communication processor 214, or the integrated communication processor 260) and a network 500 may be in the RRC_CONNECTED state in operation 611. Data may be transmitted and/or received based on an RRC connection established between the electronic device 101 and the network 500. The electronic device 101 may start the RRC inactivity timer in operation 613. In operation 615, the network 500 may start the RRC inactivity timer. As described above, there is no limit to the start event of the RRC inactivity timer.

According to various embodiments, in operation 617, the electronic device 101 may determine to quickly release the RRC connection. For example, the electronic device 101 may determine to quickly release the RRC connection based on the expiration of the first timer having a shorter expiration time than the RRC inactivity timer. The first timer may start simultaneously with, e.g., the RRC inactivity timer. The start event of the first timer may be set to be the same as the start event of the RRC inactivity timer, or the start event of the first timer may be set to be the start of the RRC inactivity timer. It will be understood by one of ordinary skill in the art that starting the RRC inactivity timer and the first timer at the same time may mean when the timers are actually started at the same time or the start times are included in the tolerance. Meanwhile, the expiration of the first timer is merely exemplary, and there is no limitation on the condition for rapid release of RRC connection. For example, the electronic device 101 may determine to change the RRC state to the RRC_IDLE state, but may determine to change the RRC state to the RRC _INACTIVE state depending on cases. As it is determined to quickly release the RRC connection, the electronic device 101 may transmit a UEAssistanceInformation message to the network 500 in operation 619. Referring to the information 619a included in the UEAssistanceInformation message, the UEAssistanceInformation-IEs may include the IE of ReleasePreference, the IE (information element) of ReleasePreference may include the information element of preferredRRC-State, and the value of the information element of preferredRRC-State may be "idle". Table 1 shows an example of UEAssistance.

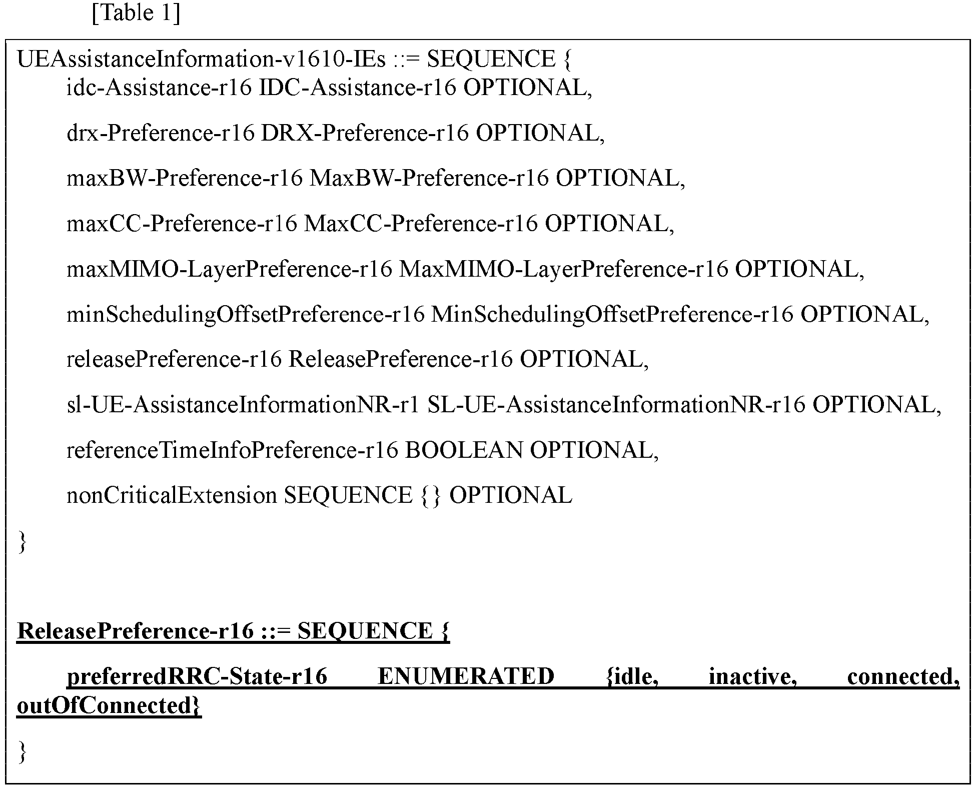

As underlined, the value that may be included in the information element of the preferredRRC-State may be one of "idle", "inactive", "connected", and "outoOfconnected". For example, according to the determination to change to the RRC_IDLE state, the electronic device 101 may determine the value of the information element of the preferredRRC-State as "idle". If it is determined to change to the RRC_INACTIVE state, the value of the information element of the preferredRRC-State may be determined to be "inactive". Alternatively, when the electronic device 101 determines to release the RRC connection but there is no desired RRC state, the value of the information element of the preferredRRC-State may be determined to be "outOfConnected". Alternatively, when maintaining the RRC connection is required, the value of the information element of preferredRRC-State may be determined to be "outOfConnected". According to various embodiments, the network 500 may transmit an RRC release message to the electronic device 101 in operation 621. For example, the network 500 may transmit an RRC release message causing a change to the RRC_IDLE state to the electronic device 101 according to the value of "idle" included in the information element of the preferredRRC-State. If the network 500 identifies that the information element of preferredRRC-State includes the value of "inactive", the network 500 may transmit an RRC release message including suspendConfig information element to the electronic device 101. In operation 623, the electronic device 101 and the network 500 may change the RRC state to the RRC_IDLE state. Accordingly, the electronic device 101 may release the RRC connection, delete the AS ID, and release the connection with the core network. The network 500 may release the RRC connection, delete the AS ID, and delete information associated with the electronic device 101 from the core network in the network 500. As described above, compared to the embodiment of FIG. 5 in which RRC connection release is waiting until the expiration of the RRC inactivity timer, RRC connection release may be possible even before the expiration of the RRC inactivity timer, and this is referred to as rapid release of the RRC connection for convenience.

FIG. 7A is a view illustrating an operation method of an electronic device according to various embodiments. The embodiment of FIG. 7A is described with reference to FIG. 7B. FIG. 7B is a view illustrating expiration of timers according to various embodiments.

According to an embodiment, an electronic device 101 (e.g., at least one of the processor 120, the first communication processor 212, the second communication processor 214, or the integrated communication processor 260) and a network 500 may identify expiration of the first timer having a shorter expiration time than the RRC inactivity timer in the RRC_CONNECTED state in operation 701. For example, the electronic device 101 may not identify (or generate) the transmission packet and/or the reception packet until the expiration time of the first timer elapses, and thus may identify the expiration of the first timer. The first timer may start, e.g., simultaneously with the start of the RRC inactivity timer (or based on the start of the RRC inactivity timer). The first timer may have an expiration time set to quickly release the RRC connection. For example, the expiration time of the first timer may be set by the electronic device 101, may be a fixed value, or may be a changeable value, and is not limited to a specific value as long as it is shorter than the expiration time of the RRC inactivity timer. The first timer may be restarted according to the identification (or generation) of the transmission packet and/or the reception packet. Meanwhile, it has been described above that the start event of the first timer may be set to be the same as the start event of the RRC inactivity timer, or may be set to the start of the RRC inactivity timer, but this is exemplary. Since the purpose of the first timer is to quickly release the RRC connection when the transmission packet and/or the reception packet is not transmitted and/or received for a predetermined time, those skilled in the art will understand that the start event is not limited as long as it is a time associated with transmission and/or reception of the transmission packet and/or the reception packet.

According to various embodiments, the electronic device 101 may identify whether it is possible to transmit the UEAssistanceInformation message including the preferredRRC-State information element in operation 703. According to the transmission of the UEAssistanceInformation message including the preferredRRC-State information element, the electronic device 101 may attempt to change the RRC state even before the RRC inactivity timer expires, thereby saving power and/or resources. If establishment or resumption of the RRC connection is performed within a short time after the RRC connection is released according to transmission of the UEAssistanceInformation message including the preferredRRC-State information element, power and/or resources may be wasted. Accordingly, as in operation 703, the electronic device 101 may identify whether it is possible to transmit the UEAssistanceInformation message including the preferredRRC-State information element, based on whether at least one condition is met . Various examples of at least one condition are described below. A case in which a UEAssistanceInformation message including a preferredRRC-State information element is transmittable may be referred to as a fast release activated state. The fast release activated state may be set when scheduling of new transmission data and/or new reception data is not expected, and/or when transmission/reception of data is somewhat delayed but it does not have a critical effect on achieving the mission (e.g., using the network slice such as eMBB), and various examples are described below. A case in which it is not possible to transmit a UEAssistanceInformation message including a preferredRRC-State information element may be referred to as a rapid release inactivated state. The fast release inactivated state may be set when scheduling of new transmission data and/or new reception data is expected, and/or when a delay in transmission/reception of data has a critical effect on achieving the mission (e.g., using the network slice such as URLLC), and various examples are described below.

Meanwhile, the order in which operations 701 and 703 are performed is not limited. For example, the electronic device 101 may be in any one of the fast release activated state or the fast release inactivated state on a regular basis. The electronic device 101 may first (or in advance) identify whether it is possible to transmit the UEAssistanceInformation message including the preferredRRC-State information element, and then identify the expiration of the first timer. Meanwhile, not only the order of operations 701 and 703, but also the order of all operations of FIG. 7 is not limited, and additional operations may be performed between successive operations, and some of the operations may be omitted, and the same applies to other embodiments of the disclosure.

According to various embodiments, when it is not possible to transmit the UEAssistanceInformation message including the preferredRRC-State information element (No in operation 703), e.g., in the fast release inactive state, in operation 705, the electronic device 101 may identify the expiration of the RRC inactivity timer started simultaneously with the first timer. For example, the electronic device 101 may fail to identify (or generate) the transmission packet and/or the reception packet until the expiration period of the RRC inactivity timer elapses. In operation 707, the electronic device 101 may change the RRC state from the RRC_CONNECTED state to the RRC _INACTIVE state or the RRC_lDLE state, based on expiration of the RRC inactivity timer. For example, referring to FIG. 7B, the electronic device 101 may simultaneously start the first timer 722 and the RRC inactivity timer 723 at a first time 721. If the electronic device 101 is in the fast release inactivated state at the second time 724 when the first timer 722 expires, the electronic device 101 may be in the RRC_CONNECTED state without releasing the RRC connection until the third time 725 when the RRC inactivity timer 723 expires even after the second time 724.

According to various embodiments, when it is possible to transmit the UEAssistanceInformation message including the preferredRRC-State information element (Yes in operation 703), e.g., in the fast release activated state, in operation 709, the electronic device 101 may transmit the UEAssistanceInformation message including the preferredRRC-State information element for causing the change from the RRC _CONNECTED state to the RRC_INACTIVE state or the RRC_IDLE state. The electronic device 101 may set the value of the preferredRRC-State information element according to the RRC state desired to be changed, and various examples are described below. The electronic device 101 may receive an RRC release message from the network 500, and may change the RRC state to any one of the RRC_IDLE state or the RRC _INACTIVE state based thereon. For example, referring to FIG. 7B, the electronic device 101 may transmit the UEAssistanceInformation message including the preferredRRC-State information element at the second time 724 when the first timer 722 expires, based on the fast release activated state. Accordingly, the RRC connection may be released even before the third time 725 when the RRC inactivity timer 723 expires.

FIG. 7C is a view illustrating an operation method of an electronic device according to various embodiments.

According to various embodiments, in operation 741, an electronic device 101 (e.g., at least one of the processor 120, the first communication processor 212, the second communication processor 214, or the integrated communication processor 260) may identify that it is possible to transmit a UEAssistanceInformation message including a preferredRRC-State information element, based on whether at least one condition is met. For example, the electronic device 101 may enter the fast release activated state, and various conditions for entering the fast release activated state are described below. In operation 743, the electronic device 101 may start the first timer simultaneously with the RRC inactivity timer. The electronic device 101 may start the first timer based on the identification of the start event only when the UEAssistanceInformation message including the preferredRRC-State information element is transmittable. If it is impossible to transmit the UEAssistanceInformation message including the preferredRRC-State information element (e.g., in the fast release inactivated state), the electronic device 101 may not start the first timer even if the start event is identified. Based on the expiration of the first timer, in operation 745, the electronic device 101 may transmit a UEAssistanceInformation message including a preferredRRC-State information element for causing a change from the RRC_CONNECTED state to the RRC_INACTIVE state or the RRC_IDLE state. The electronic device 101 may receive an RRC release message corresponding to the UEAssistanceInformation message from the network 500. The electronic device 101 may change the RRC state from the RRC _CONNECTED state to the RRC _INACTIVE state or the RRC_IDLE state based on the RRC release message.

Hereinafter, various embodiments for fast release activation or inactivation of the electronic device are described.

FIG. 8A is a view illustrating an operation method of an electronic device according to various embodiments.

According to an embodiment, an electronic device 101 (e.g., at least one of the processor 120, the first communication processor 212, the second communication processor 214, or the integrated communication processor 260) may identify the number of expirations of the RRC inactivity timer during a designated period in operation 801. The designated period is not limited as long as it is longer than the expiration time of the RRC inactivity timer. In operation 803, the electronic device 101 may identify whether the number of expirations of the RRC inactivity timer is greater than or equal to a threshold number. The number of expirations of the RRC inactivity timer may be measured by, e.g., a communication processor (e.g., at least one of the first communication processor 212, the second communication processor 214, or the integrated communication processor 260), but is not limited thereto. If the number of expirations of the RRC inactivity timer is less than the threshold number (No in operation 803), the electronic device 101 may activate fast release in operation 805. A relatively large number of expirations of the RRC inactivity timer may mean that the frequency (or probability) of transmission and/or reception of data by the electronic device 101 is relatively low. This may mean that even if the RRC connection is released, it is less likely that the RRC connection is established again within a relatively short time, or the RRC connection is resumed. Accordingly, when the number of expirations of the RRC inactivity timer is greater than or equal to the threshold number, the electronic device 101 may activate fast release. If the number of expirations of the timer is less than the threshold number (No in operation 803), the electronic device 101 may inactivate the fast release in operation 807. A relatively small number of expirations of the RRC inactivity timer may mean that the frequency (or probability) of transmission and/or reception of data by the electronic device 101 is relatively high. This may mean that even if the RRC connection is released, it is highly likely that the RRC connection is established again within a relatively short time, or the RRC connection is resumed. Accordingly, when the number of expirations of the RRC inactivity timer is less than the threshold number, the electronic device 101 may inactivate fast release. The threshold number may be fixed, but may be changed. In various embodiments, the electronic device 101 may determine whether to activate fast release, considering not only the RRC inactivity timer but also the number of expirations of the DRX inactivity timer. For example, the electronic device 101 may determine whether to activate fast release according to whether the sum of the number of expirations of the RRC inactivity timer and the number of expirations of the DRX inactivity timer is greater than or equal to a threshold number. In another example, the electronic device 101 may determine whether to activate fast release considering only the number of expirations of the DRX inactivity timer and depending on whether the number of expirations is the threshold number or more. Meanwhile, the start time of the designated period may be initialized while entering, e.g., a fast release inactivated state. Meanwhile, "activation of fast release" in operation 805 may refer to switching to the activated state of fast release if the electronic device 101 has inactivated fast release, or maintaining the activated state if the electronic device 101 has activated fast release, and such a reference may also be applied to other embodiments including the present embodiment. Meanwhile, "inactivation of fast release" in operation 807 may refer to switching to the inactivated state of fast release if the electronic device 101 has activated fast release, or maintaining the inactivated state if the electronic device 101 has inactivated fast release, and such a reference may also be applied to other embodiments including the present embodiment.

Meanwhile, it is merely exemplary to determine whether to activate fast release depending on whether the number of expirations of the RRC inactivity timer and/or the number of expirations of the DRX inactivity timer is greater than or equal to a threshold number. In another example, when a first condition in which the number of expirations of the RRC inactivity timer and/or the number of expirations of the DRX inactivity timer is equal to or greater than a threshold number and a first additional condition different from the first condition are met, the electronic device 101 may activate fast release. Alternatively, in another example, when a second condition in which the number of expirations of the RRC inactivity timer and/or the number of expirations of the DRX inactivity timer is less than the threshold number and a second additional condition different from the second condition are met, the electronic device 101 may inactivate the fast release.

FIG. 8B is a view illustrating an operation method of an electronic device according to various embodiments.

According to various embodiments, an electronic device 101 (e.g., at least one of the processor 120, the first communication processor 212, the second communication processor 214, or the integrated communication processor 260) may identify the number of RRC connection establishments and/or the number of RRC connection resumptions during a designated period in operation 811. The number of RRC connection establishments and/or the number of RRC connection resumptions may be measured by, e.g., a communication processor (e.g., at least one of the first communication processor 212, the second communication processor 214, or the integrated communication processor 260), but is not limited thereto. If the number of RRC connection establishments and/or the number of RRC connection resumptions is less than a threshold number (No in operation 813), the electronic device 101 may activate fast release in operation 815. A relatively small number of RRC connection establishments and/or a relatively small number of RRC connection resumptions may mean that the frequency (or probability) of transmission and/or reception of data by the electronic device 101 is relatively low. This may mean that even if the RRC connection is released, it is less likely that the RRC connection is established again within a relatively short time, or the RRC connection is resumed. Accordingly, when the number of RRC connection establishments and/or the number of RRC connection resumptions is less than the threshold number, the electronic device 101 may activate fast release. If the number of RRC connection establishments and/or the number of RRC connection resumptions is the threshold number or more (Yes in operation 813), the electronic device 101 may inactivate fast release in operation 817. A relatively large number of RRC connection establishments and/or a relatively large number of RRC connection resumptions may mean that the frequency (or probability) of transmission and/or reception of data by the electronic device 101 is relatively high. This may mean that even if the RRC connection is released, it is highly likely that the RRC connection is established again within a relatively short time, or the RRC connection is resumed. Accordingly, when the number of RRC connection establishments and/or the number of RRC connection resumptions is the threshold number or more, the electronic device 101 may inactivate fast release. The threshold number may be fixed, but may be changed.

Meanwhile, it is merely exemplary to determine whether to activate fast release depending on whether the number of RRC connection establishments and/or the number of RRC connection resumptions is greater than or equal to a threshold number. In another example, when a first condition in which the number of RRC connection establishments and/or the number of RRC connection resumptions is less than a threshold number and a first additional condition different from the first condition are met , the electronic device 101 may activate fast release. Alternatively, in another example, when a second condition in which the number of RRC connection establishments and/or the number of RRC connection resumptions is the threshold number or more and a second additional condition different from the second condition are met, the electronic device 101 may inactivate the fast release.

FIG. 9 is a view illustrating an operation method of an electronic device according to various embodiments.

According to an embodiment, an electronic device 101 (e.g., at least one of the processor 120, the first communication processor 212, the second communication processor 214, or the integrated communication processor 260) may identify execution of an application generating a Keep alive packet in operation 901. The Keep alive packet may be transmitted from the electronic device 101 to identify whether a data link established between devices operates and/or to maintain the data link. Among at least one application installed in the electronic device 101, there may be an application capable of transmitting the Keep alive packet. The electronic device 101 may manage whether to transmit the Keep alive packet of at least one installed application. The electronic device 101 may identify whether it is possible to transmit the Keep alive packet among at least one executed application. In operation 903, the electronic device 101 may identify whether the information associated with packet generation meets a designated condition. For example, the electronic device 101 may identify whether data throughput is less than or equal to a threshold as whether the condition is met. The relatively small data throughput may be a case where only the Keep alive packet is transmitted, and the threshold may be set based on the data throughput when only the Keep alive packet is transmitted. The threshold may be a fixed value or may be set to differ for each application. It will be understood by one of ordinary skill in the art that the above-described condition of whether the data throughput is less than or equal to the threshold is exemplary, and is not limited as long as it is a condition capable of indicating that only the Keep alive packet is generated. When an application capable of transmitting the Keep alive packet is running and information associated with packet generation meets the designated condition (Yes in operation 903), the electronic device 101 may activate fast release in operation 905. Meanwhile, when the information associated with packet generation does not meet the designated condition even if the application capable of transmitting the Keep alive packet is running (No in operation 903), the electronic device 101 may inactivate the fast release in operation 907. The generation of only the Keep alive packet may mean that even if the RRC connection is released, it is less likely that the RRC connection is established again within a relatively short time, or the RRC connection is resumed. Accordingly, when only the Keep alive packet is generated, the electronic device 101 may activate fast release. Meanwhile, the generation of a message other than the Keep alive packet may mean that even if the RRC connection is released, it is highly likely that the RRC connection is established again within a relatively short time or the RRC connection is resumed. Accordingly, when a message other than the Keep alive packet is generated, the electronic device 101 may inactivate the fast release.

In one example, the processor 120 may identify whether only the Keep alive packet is generated. If it is identified that only the Keep alive packet is generated, the processor 120 may provide an indication of fast release activation to the communication processor (e.g., at least one of the first communication processor 212, the second communication processor 214, or the integrated communication processor 260). The communication processor (e.g., at least one of the first communication processor 212, the second communication processor 214, or the integrated communication processor 260) may activate fast release based on the indication provided from the processor 120. In another example, the processor 120 may provide an indication indicating that an application capable of transmitting the Keep alive packet is being executed to a communication processor (e.g., at least one of the first communication processor 212, the second communication processor 214, or the integrated communication processor 260). The communication processor (e.g., at least one of the first communication processor 212, the second communication processor 214, or the integrated communication processor 260) may receive the indication and may activate fast release when information associated with packet generation meets a designated condition. For example, the communication processor (e.g., at least one of the first communication processor 212, the second communication processor 214, or the integrated communication processor 260) may identify data throughput through an interface with the processor 120 and/or by itself, and thus may identify whether the information associated with packet generation meets a designated condition.

Meanwhile, it is merely exemplary to determine whether to activate fast release according to whether only the Keep alive packet is generated. In another example, when the first condition in which only the Keep alive packet is determined to be generated and the first additional condition are met, the electronic device 101 may activate fast release. Alternatively, in another example, when the second condition in which a packet other than the Keep alive packet is determined to be generated as well and the second additional condition are met, the electronic device 101 may inactivate fast release.

FIG. 10 is a view illustrating an operation method of an electronic device according to various embodiments.

According to an embodiment, an electronic device 101 (e.g., at least one of the processor 120, the first communication processor 212, the second communication processor 214, or the integrated communication processor 260) may activate fast release in operation 1001. In the fast release activated state, the electronic device 101 may transmit the UEAssistanceInformation message including the preferredRRC-State information element to the network 500 in operation 1003. For example, the electronic device 101 may transmit the UEAssistanceInformation message including the preferredRRC-State information element to the network 500 based on the expiration of the first timer having an expiration time shorter than that of the RRC inactivity timer, but is not limited thereto. The network 500 may transmit an RRC release message to the electronic device 101 based on reception of the UEAssistanceInformation message including the preferredRRC-State information element.

According to various embodiments, in operation 1005, the electronic device 101 may receive the RRC release message from the network 500 and may measure a reception time (t_{rrcRel}) of the RRC release message. Based on the reception of the RRC release message, the electronic device 101 may release the RRC connection and enter the RRC_IDLE state in operation 1007. In operation 1009, the electronic device 101 may identify whether an event for attempting RRC connection is detected. In one example, a communication processor (e.g., at least one of the first communication processor 212, the second communication processor 214, or the integrated communication processor 260) may identify whether an event for attempting an RRC connection is detected, based on an indication from an upper layer, but is not limited thereto. If the event for the RRC connection attempt is detected (Yes in 1009), the electronic device 101 may attempt the RRC connection in operation 1011. For example, the electronic device 101 may attempt RRC connection by transmitting an RRC setup request message to the network 500. In operation 1013, the electronic device 101 may measure the RRC connection attempt time t_{rrcReq}. For example, the RRC connection attempt time t_{rrcReq} may be the transmission time of the RRC setup request message, but is not limited as long as it is a time of any one of the operations of the electronic device 101 for RRC connection in the RRC_IDLE state. The electronic device 101 may establish an RRC connection with the network, and may enter the RRC_CONNECTED state in operation 1015.

According to various embodiments, in operation 1017, the electronic device 101 may identify whether the difference between the RRC connection attempt time t_{rrcReq} and the RRC release message reception time t_{rrcRel} is less than or equal to a threshold. If the difference between the RRC connection attempt time t_{rrcReq} and the RRC release message reception time t_{rrcRel} is less than or equal to the threshold (Yes in 1017), the electronic device 101 may inactivate fast release in operation 1019. Since the difference between the RRC connection attempt time t_{rrcReq} and the RRC release message reception time t_{rrcRel} being less than or equal to the threshold may be a case in which data is generated relatively frequently, the electronic device 101 may inactivate fast release. If the difference between the RRC connection attempt time t_{rrcReq} and the RRC release message reception time t_{rrcRel} exceeds the threshold (No in 1017), the electronic device 101 may maintain the activated state of the fast release.

In another embodiment, the electronic device 101 may enter the RRC_INACTIVE state instead of entering the RRC_IDLE state in operation 1007. For example, the electronic device 101 may enter the RRC_INACTIVE state according to reception of the RRC release message including the suspendConfig information element. The electronic device 101 may measure the reception time t_{rrcRel} of the RRC release message including the suspendConfig information element. The electronic device 101 may detect an event associated with RRC connection resumption in the RRC_INACTIVE state. The electronic device 101 may attempt to resume RRC connection. For example, the electronic device 101 may attempt to resume the RRC connection by transmitting an RRC connection resume request message, and may measure a time t_{rrcresumptionreq} of attempting resumption of the RRC connection. When the difference between the RRC connection resume attempt time t_{rrcresumptionreq} and the reception time t_{rrcRel} of the RRC release message including the suspendConfig information element is less than or equal to the threshold, the electronic device 101 may inactivate the fast release. When the difference between the RRC connection resume attempt time t_{rrcresumptionreq} and the reception time t_{rrcRel} of the RRC release message including the suspendConfig information element exceeds the threshold, the electronic device 101 may maintain the activated state of the fast release.

Meanwhile, it is merely exemplary to determine whether to activate fast release according to whether the difference between the RRC connection attempt time t_{rrcReq} and the RRC release message reception time t_{rrcRel} is less than or equal to the threshold, or whether the difference between the RRC connection resume attempt time t_{rrcresumptionreq} and the reception time t_{rrcRel} of the RRC release message including suspendConfig information element is less than or equal to the threshold. In another example, if the difference in the RRC release message reception time t_{rrcRel} is less than or equal to the threshold, or if the first condition in which the difference between the RRC connection resume attempt time t_{rrcresumptionreq} and the reception time t_{rrcRel} of RRC release message including suspendConfig information element is less than or equal to the threshold and the first additional condition different from the first condition are met, the electronic device 101 may inactivate fast release.

FIG. 11 is a view illustrating an operation method of an electronic device according to various embodiments.

According to an embodiment, an electronic device 101 (e.g., at least one of the processor 120, the first communication processor 212, the second communication processor 214, or the integrated communication processor 260) may activate fast release in operation 1101. In operation 1103, the electronic device 101 may start the RRC inactivity timer. In operation 1105, the electronic device 101 may start a timer for determining whether to activate fast release. The start event of the timer for determining whether to activate fast release in the electronic device 101 is not limited. The expiration time of the timer for determining whether to activate fast release may be shorter than or equal to, e.g., the expiration time of the RRC inactivity timer. In operation 1107, the electronic device 101 may transmit the UEAssistanceInformation message including the preferredRRC-State information element to the network 500 based on the expiration of the first timer having an expiration time shorter than that of the RRC inactivity timer. The expiration time of the first timer may be shorter than the expiration time of the timer for determining whether to activate fast release. The network 500 may transmit an RRC release message to the electronic device 101 based on reception of the UEAssistanceInformation message including the preferredRRC-State information element.

According to various embodiments, in operation 1109, the electronic device 101 may receive the RRC release message from the network 500. In operation 1111, the electronic device 101 may release the RRC connection and enter the RRC_IDLE state. In operation 1113, the electronic device 101 may identify whether an event for attempting RRC connection is detected. If the event for the RRC connection attempt is detected (Yes in 113), the electronic device 101 may attempt the RRC connection in operation 1115. For example, the electronic device 101 may attempt RRC connection by transmitting an RRC setup request message to the network 500. The electronic device 101 may establish an RRC connection with the network, and may enter the RRC_CONNECTED state in operation 1117. The electronic device 101 may identify whether the timer for determining whether to activate fast release expires in operation 1119, based on the RRC_CONNECTED state entry time. Before the timer for determining whether to activate the fast release expires (No in 1119), the electronic device 101 may inactivate the fast release in operation 1121. Being prior to the expiration of the timer for determining whether to activate fast release is a situation in which an RRC connection is established relatively quickly after entering the RRC_IDLE state, and the electronic device 101 may be configured to inactivate fast release. If the timer for determining whether to activate the fast release expires (Yes in 1119), the electronic device 101 may maintain the activated state of the fast release. The expiration of the timer for determining whether to activate fast release is a situation in which an RRC connection is established relatively late after entering the RRC_IDLE state, and the electronic device 101 may be configured to maintain the activated state of fast release.

In another embodiment, the electronic device 101 may enter the RRC_INACTIVE state instead of entering the RRC_IDLE state in operation 1111. For example, the electronic device 101 may enter the RRC_INACTIVE state according to reception of the RRC release message including the suspendConfig information element. The electronic device 101 may then identify whether an event for RRC resumption is detected. If an event for RRC connection resumption is detected, the electronic device 101 may attempt RRC connection resumption. For example, the electronic device 101 may attempt to resume RRC connection by transmitting an RRC resume request message to the network 500. The electronic device 101 may resume RRC connection with the network and may enter the RRC _CONNECTED state. The electronic device 101 may identify whether the timer for determining whether to activate fast release expires, based on the RRC_CONNECTED state entry time. Before the timer for determining whether to activate the fast release expires, the electronic device 101 may inactivate the fast release. If the timer for determining whether to activate the fast release expires, the electronic device 101 may maintain the activated state of the fast release.

Meanwhile, it is merely exemplary to determine whether to activate fast release according to whether the timer for determining whether to activate fast release expires. In another example, when the first condition in which the timer for determining whether to activate fast release does not expire, and a first additional condition different therefrom are met, the electronic device 101 may inactivate fast release.

FIG. 12 is a view illustrating an operation method of an electronic device according to various embodiments.

According to an embodiment, an electronic device 101 (e.g., at least one of the processor 120, the first communication processor 212, the second communication processor 214, or the integrated communication processor 260) may identify execution of an application in operation 1201. In operation 1203, the electronic device 101 may identify whether the executed application is of a designated type. If the executed application is of the designated type (Yes in operation 1203), the electronic device 101 may activate fast release in operation 1205. If the executed application is not of the designated type (No in operation 1203), the electronic device 101 may inactivate the fast release in operation 1207. For example, the designated type is designated by the electronic device 101 or the network operator, and may be a type in which data is generated relatively frequently and/or data delay is not critical. For example, a real-time streaming application relatively frequently generates data, and may be the designated type of application. For example, an Internet of Things (IoT)-related application has a relatively low frequency of data generation and may not be the designated type of application. For example, a V2X-related application may be the designated type of application as data delay has a critical effect on the achievement of the mission. For example, a chatting application may not be the designated type of application because the data delay does not have a critical effect on the achievement of the mission. However, the above-described classification criteria are merely exemplary, and the chatting application may be set to the designated type, and the application of the designated type is not limited. Whether to execute the designated type of application may be determined by the processor 120, and the processor 120 may determine whether to activate fast release. The processor 120 may provide an indication indicating whether to activate fast release to a communication processor (e.g., at least one of the first communication processor 212, the second communication processor 214, or the integrated communication processor 260). Alternatively, a communication processor (e.g., at least one of the first communication processor 212, the second communication processor 214, or the integrated communication processor 260) may store and/or manage information about the designated type or application. For example, the processor 120 may provide identification information or type of an executed application to a communication processor (e.g., at least one of the first communication processor 212, the second communication processor 214, or the integrated communication processor 260). The communication processor (e.g., at least one of the first communication processor 212, the second communication processor 214, or the integrated communication processor 260) may identify indication information about the executed application or whether the type is the designated type and determine whether to activate fast release based thereupon.

Meanwhile, it is merely exemplary to determine whether to activate fast release according to whether the designated type of application is executed. In another example, the electronic device 101 may activate fast release when a first condition in which the designated type of application is determined to be executed and a first additional condition different therefrom are met. Alternatively, in another example, when a second condition in which the designated type of application is determined not to be executed and a second additional condition different therefrom are met, the electronic device 101 may inactivate fast release.

FIG. 13 is a view illustrating an operation method of an electronic device according to various embodiments.

According to an embodiment, an electronic device 101 (e.g., at least one of the processor 120, the first communication processor 212, the second communication processor 214, or the integrated communication processor 260) may establish a PDU session in operation 1301. In operation 1303, the electronic device 101 may identify whether the established PDU session (e.g., S-NSSAI) is of a designated type. If the established PDU session is of the designated type (Yes in operation 1303), the electronic device 101 may activate fast release in operation 1305. If the established PDU session is not of the designated type (No in operation 1303), the electronic device 101 may inactivate the fast release in operation 1307. For example, the designated type is designated by the electronic device 101 or the network operator, and may be a type in which data is generated relatively frequently and/or data delay does not have a critical effect on the achievement of the mission. For example, the URLLC or the SST corresponding to the V2X is of a type in which the data delay has a critical effect on the achievement of the mission, and may be a type of a PDU session of the designated type. For example, the SST corresponding to the eMBB may not be a type of a PDU session type of the designated type, in which the data delay does not have a critical effect on the achievement of the mission. For example, the SST corresponding to the mIoT has a relatively low frequency of data generation, and may not be of a PDU session type of the designated type. However, the above-described classification criteria are merely exemplary, and the SST corresponding to the eMBB may be set as the type of the designated PDU session, and the SST of the designated type is not limited. Whether it is a PDU session of the designated type may be determined by a communication processor (e.g., at least one of the first communication processor 212, the second communication processor 214, or the integrated communication processor 260), but is not limited thereto.

Meanwhile, determining whether to activate fast release according to whether to establish a PDU session of the designated type is merely exemplary. In another example, the electronic device 101 may activate fast release when a first condition in which establishment of the designated type of PDU session is determined to be executed and a first additional condition different therefrom are met. Alternatively, in another example, when a second condition in which establishment of the designated type of PDU session is determined not to be executed and a second additional condition different therefrom are met, the electronic device 101 may inactivate fast release.

FIG. 14A is a view illustrating an operation method of an electronic device according to various embodiments.

According to an embodiment, an electronic device 101 (e.g., at least one of the processor 120, the first communication processor 212, the second communication processor 214, or the integrated communication processor 260) may perform a serving cell change in operation 1401. For example, the electronic device 101 may change the serving cell, based on a handover or a redirection. In operation 1403, the electronic device 101 may load a blacklist of the cell. Here, the cell blacklist may not be a blacklist for camping on or accessing the cell, but may be a blacklist for managing whether to activate fast release. The management of the cell blacklist is described with reference to FIG. 14B. For example, the blacklist may include identification information (e.g., at least one of PLMN, cell id, or physical cell id (PCID)) about the cell that has not transmitted an RRC release message even though the RRC inactivity timer has expired. In operation 1405, the electronic device 101 may identify whether the serving cell is included in the blacklist. When the serving cell is included in the blacklist (Yes in 1405), the electronic device 101 may activate fast release in operation 1407. When the serving cell is not included in the blacklist (No in 1405), the electronic device 101 may inactivate the fast release in operation 1409. For example, in the case of a cell that does not transmit an RRC release message even though the RRC inactivity timer expires, execution of fast RRC connection release may enable more stable communication. Accordingly, when the electronic device 101 accesses a cell that has not transmitted the RRC release message even though the RRC inactivity timer expires, the electronic device 101 may activate fast release.

Meanwhile, it is merely exemplary to determine whether to activate fast release according to whether the serving cell is included in the blacklist. In another example, when a first condition in which the serving cell is included in the blacklist and a first additional condition different from the first condition are met, the electronic device 101 may activate fast release. Alternatively, in another example, when a second condition in which the serving cell is not included in the blacklist and a second additional condition different from the second condition are met, the electronic device 101 may inactivate the fast release.

FIG. 14B is a view illustrating an operation method of an electronic device according to various embodiments.

According to an embodiment, an electronic device 101 (e.g., at least one of the processor 120, the first communication processor 212, the second communication processor 214, or the integrated communication processor 260) may inactivate fast release in operation 1421. In operation 1423, the electronic device 101 may identify expiration of the RRC inactivity timer in the state in which the fast release is inactivated. In operation 1425, the electronic device 101 may identify whether an RRC release message is received. The network 500 may be configured to transmit an RRC release message based on the expiration of the RRC inactivity timer but, in some cases, may not transmit the RRC release message even though the RRC inactivity timer expires. When the RRC release message is received as the RRC inactivity timer expires (Yes in 1425), the electronic device 101 may exclude the corresponding cell from the blacklist in operation 1426. When the corresponding cell is already included in the blacklist, the electronic device 101 may delete the corresponding cell, or when the corresponding cell is not included in the blacklist, the electronic device 101 may refrain from adding the corresponding cell to the blacklist. When the RRC release message is not received despite the expiration of the RRC inactivity timer (No in 1425), the electronic device 101 may include the corresponding cell in the blacklist in operation 1427. When the corresponding cell is already included in the blacklist, the electronic device 101 may maintain the corresponding cell, or when the corresponding cell is not included in the blacklist, the electronic device 101 may add the corresponding cell to the blacklist. After including the corresponding cell in the blacklist, the electronic device 101 may activate fast release in operation 1429. As described with reference to FIG. 14A, in the case of a cell that does not transmit an RRC release message even though the RRC inactivity timer expires, execution of fast RRC connection release may enable more stable communication. In operation 1431, the electronic device 101 may identify whether another fast release inactivation condition is met. When another fast release inactivation condition is met (Yes in operation 1431), the electronic device 101 may exclude the corresponding cell from the blacklist and may be in the fast release inactivated state in operation 1426. When the other fast release inactivation condition is not met (No in 1431), the electronic device 101 may maintain the fast release activated state.

FIG. 15A is a view illustrating an operation method of an electronic device according to various embodiments.

According to an embodiment, an electronic device 101 (e.g., at least one of the processor 120, the first communication processor 212, the second communication processor 214, or the integrated communication processor 260) may identify that the first condition is met in operation 1501. In operation 1503, the electronic device 101 may switch whether to activate fast release. For example, if the first condition is a condition for switching the fast release inactivated state to the fast release activated state, the electronic device 101 may switch the fast release inactivated state to the fast release activated state in operation 1503. For example, if the first condition is a condition for switching the fast release activated state to the fast release inactivated state, the electronic device 101 may switch the fast release activated state to the fast release inactivated state in operation 1503. After switching whether to activate fast release, the electronic device 101 may identify that the first condition is not met in operation 1505. Based on identifying that the first condition is not met, the electronic device 101 may switch whether to activate fast release in operation 1507 regardless of whether another additional condition is met. For example, when the first condition is a condition for switching the fast release inactivated state to the fast release activated state and the electronic device 101 is in the fast release activated state according to the satisfaction of the first condition, the electronic device 101 may switch back to the fast release inactivated state based on the identification of the dissatisfaction of the first condition. For example, when the first condition is a condition for switching the fast release activated state to the fast release inactivated state and the electronic device 101 is in the fast release inactivated state according to the satisfaction of the first condition, the electronic device 101 may switch back to the fast release activated state based on the identification of the dissatisfaction of the first condition.

FIG. 15B is a view illustrating an operation method of an electronic device according to various embodiments.

According to an embodiment, an electronic device 101 (e.g., at least one of the processor 120, the first communication processor 212, the second communication processor 214, or the integrated communication processor 260) may identify that the first condition is met in operation 1511. In operation 1513, the electronic device 101 may switch whether to activate fast release. After switching whether to activate fast release, the electronic device 101 may identify that the first condition is not met in operation 1515. In operation 1517, the electronic device 101 may identify whether an additional condition for switching whether to activate fast release is met. For example, when the first condition is a condition for switching the fast release inactivated state to the fast release activated state and the electronic device 101 is in the fast release activated state according to the satisfaction of the first condition, the electronic device 101 may identify whether an additional condition for switching to the fast release inactivated state is met, based on the identification of the dissatisfaction of the first condition. For example, when the first condition is a condition for switching the fast release activated state to the fast release inactivated state and the electronic device 101 is in the fast release inactivated state according to the satisfaction of the first condition, the electronic device 101 may identify whether an additional condition for switching to the fast release activated state is met, based on the identification of the dissatisfaction of the first condition. When the additional condition is not met (No in operation 1517), the electronic device 101 may maintain whether to activate fast release in operation 1519. When the additional condition is met (Yes in 1517), the electronic device 101 may switch whether to activate fast release in operation 1521.

According to various embodiments, as illustrated in FIG. 15A, after switching whether to activate fast release according to satisfaction of a specific condition, if it is identified that the specific condition is not met, the electronic device 101 may return to the existing fast release state. Alternatively, as in the embodiment of FIG. 15B, after the electronic device 101 switches whether to activate fast release according to the satisfaction of the specific condition, the electronic device 101 may return to the existing fast release state only when an additional condition as well as the specific condition is met. Alternatively, for some conditions, as shown in FIG. 15A, after switching whether to activate fast release according to the satisfaction of the condition, if the dissatisfaction of the condition is identified, the electronic device 101 may return to the existing fast release state, and for some other conditions, as shown in FIG. 15B, after switching whether to activate fast release according to the satisfaction of the condition, the electronic device 101 may be configured to return to the existing fast release state only when the condition is not met and the additional condition are met.

FIG. 16 is a view illustrating activation of rapid release of an electronic device according to various embodiments.

According to an embodiment, an electronic device 101 (e.g., at least one of the processor 120, the first communication processor 212, the second communication processor 214, or the integrated communication processor 260) may be in a fast release inactivated state 1601. For example, in operation 1611, the electronic device 101 may identify that the number of expirations of the inactivity timer (e.g., RRC inactivity timer and/or DRX inactivity timer) in the fast release inactivated state 1601 meets a designated condition (e.g., less than a threshold number). Based on the satisfaction of the designated condition, the electronic device 101 may monitor whether another fast release inactivation condition is not met, and may identify that the other fast release inactivation condition is not met in operation 1623. The electronic device 101 may enter the fast release activated state 1602 based on the other fast release inactivation condition not being met.

For example, in operation 1612, the electronic device 101 may identify that a condition for determining that only the Keep alive packet is generated in the fast release inactivated state 1601 is met. Based on the satisfaction of the designated condition, the electronic device 101 may monitor whether another fast release inactivation condition is not met, and may identify that the other fast release inactivation condition is not met in operation 1623. The electronic device 101 may enter the fast release activated state 1602 based on the other fast release inactivation condition not being met.

For example, in operation 1613, the electronic device 101 may identify that a condition for determining that the designated type of application (e.g., an IoT application) is executed in the fast release inactivated state 1601 is met. The electronic device 101 may identify that another application is not executed in operation 1621. When another application is executed, the electronic device 101 may maintain the fast release inactivated state 1601. When it is determined that the other application is not executed, the electronic device 101 may monitor whether the other fast release inactivation condition is not met, and may identify that the other fast release inactivation condition is not met in operation 1623. The electronic device 101 may enter the fast release activated state 1602 based on the other fast release inactivation condition not being met. Meanwhile, it is merely exemplary to maintain the fast release inactivated state 1601 when another application is executed, and in another embodiment, when the designated type of application is executed, the electronic device 101 may be configured to activate fast release even when another application is executed. In another embodiment, the electronic device 101 may allocate a priority for each application. For example, when the priority of the designated type of application is higher than the priority of another application being executed, the electronic device 101 may activate fast release. For example, when the priority of the designated type of application is lower than the priority of another application being executed, the electronic device 101 may maintain the fast release inactivated state 1601.

For example, in operation 1614, the electronic device 101 may identify that a condition for determining that a PDU session of the designated type (e.g., MIoT) is established in the fast release inactivated state 1601 is met. The electronic device 101 may identify that another PDU session is not established in operation 1622. When another PDU session is established, the electronic device 101 may maintain the fast release inactivated state 1601. When it is determined that another PDU session is not established, the electronic device 101 may monitor whether the other fast release inactivation condition is not met, and may identify that the other fast release inactivation condition is not met in operation 1623. The electronic device 101 may enter the fast release activated state 1602 based on the other fast release inactivation condition not being met. Meanwhile, it is merely exemplary to maintain the fast release inactivated state 1601 when another PDU session is established. In another embodiment, when a PDU session of the designated type is established, the electronic device 101 may be configured to activate fast release even if another PDU session is established. In another embodiment, the electronic device 101 may allocate a priority for each PDU session. For example, when the priority of the PDU session of the designated type is higher than the priority of another PDU session being executed, the electronic device 101 may activate fast release. For example, when the priority of the PDU session of the designated type is lower than the priority of the other PDU session being executed, the electronic device 101 may maintain the fast release inactivated state 1601.

For example, in operation 1615, the electronic device 101 may identify that a condition for determining that the designated type of application (e.g., a URLLC-related application) is terminated in the fast release inactivated state 1601 is met. In operation 1624, the electronic device 101 may identify that at least one of other fast release activation conditions is met. When another fast release activation condition is not met, the electronic device 101 may maintain the fast release inactivated state 1601. When it is determined that another fast release activation condition is met, the electronic device 101 may enter the fast release activated state 1602. For example, as described with reference to FIG. 15B, the electronic device 101 may be implemented to activate fast release only when an additional fast release activation condition is met in addition to termination of the URLLC-related application. However, this is merely an example, and it will be understood by one of ordinary skill in the art that the electronic device 101 may be implemented to enter the fast release activated state 1602 regardless of whether an additional fast release activation condition is met, based on termination of the URLLC-related application.

For example, in operation 1616, the electronic device 101 may identify that the condition for determining that the PDU session of the designated type (e.g., URLLC) is released in the fast release inactivated state 1601 is met. In operation 1624, the electronic device 101 may identify that at least one of other fast release activation conditions is met. When another fast release activation condition is not met, the electronic device 101 may maintain the fast release inactivated state 1601. When it is determined that another fast release activation condition is met, the electronic device 101 may enter the fast release activated state 1602. For example, as described with reference to FIG. 15B, the electronic device 101 may be implemented to activate fast release only when an additional fast release activation condition is met in addition to release of the PDU session of the URLLC type. However, this is merely an example, and it will be appreciated by one of ordinary skill in the art that the electronic device 101 may be implemented to enter the fast release activated state 1602 regardless of whether an additional fast release activation condition is met, based on the release of the PDU session of the URLLC type.

For example, in operation 1617, the electronic device 101 may identify that the serving cell accessed in the fast release inactivated state 1601 is included in the blacklist. The electronic device 101 may enter the fast release activated state 1602 based on the serving cell being included in the blacklist. Meanwhile, in FIG. 16, the electronic device 101 is illustrated as immediately entering the fast release activated state 1602 based on the serving cell being included in the blacklist, but this is merely an example. In another example, it will be appreciated by one of ordinary skill in the art that, when the serving cell is included in the blacklist, the electronic device 101 may be implemented to enter the fast release activated state 1602 based on dissatisfaction of another fast release inactivation condition and/or satisfaction of an additional fast release activation condition.

Meanwhile, it is merely exemplary to activate fast release only when another fast release inactivation condition is not met when one condition for activating fast release is met, as in operation 1623. In various embodiments, the electronic device 101 may identify that the fast release activation condition and the fast release inactivation condition are met at least simultaneously. The electronic device 101 may assign priority to each of the fast release activation condition and the fast release inactivation condition. When the priority of the fast release activation condition is higher than the priority of the fast release inactivation condition, the electronic device 101 may activate the fast release. For example, when the priority of the fast release activation condition in which the number of expirations of the inactivity timer is less than the threshold number is higher than the priority of the fast release inactivation condition of the IoT application termination, the electronic device 101 may activate the fast release. Alternatively, when the priority of the fast release activation condition is lower than the priority of the fast release inactivation condition, the electronic device 101 may maintain the fast release inactivated state 1601. If the priority of the fast release activation condition in which the number of expirations of the inactivity timer is less than the threshold number is lower than the priority of the fast release inactivation condition of establishing the PDU session of URLLC, the electronic device 101 may maintain the fast release inactivated state 1601.

For example, at least one of the example in which the number of expirations of the inactivity timer meets a designated condition in 1611 of FIG. 16, the example in which the condition associated with the Keep alive packet is met in 1612, the example in which the first type of application is executed in 1613, the example in which the first type of PDU session is established in 1614, or the example in which the serving cell is included in the blacklist in 1617 is described as whether to perform fast release being switched regardless of whether an additional condition is met as illustrated in FIG. 15B, but this is merely exemplary, and it will be appreciated by one of ordinary skill in the art that it may be implemented to switch whether to perform fast release only when an additional condition is met in addition to satisfaction of at least one of the above examples. Further, at least one of the example in which the second type of application is terminated in 1615 of FIG. 16 or the example in which the second type of PDU session is released in 1616 is described as whether to perform fast release being switched only when an additional condition is met as illustrated in FIG. 15B, but this is merely exemplary, and it will be appreciated by one of ordinary skill in the art that it may be implemented to switch whether to perform fast release only with satisfaction of at least one of the above examples.

FIG. 17 is a view illustrating activation of rapid release of an electronic device according to various embodiments.

According to an embodiment, an electronic device 101 (e.g., at least one of the processor 120, the first communication processor 212, the second communication processor 214, or the integrated communication processor 260) may be in the fast release activated state 1702. For example, in operation 1711, the electronic device 101 may identify that the number of expirations of the inactivity timer (e.g., RRC inactivity timer and/or DRX inactivity timer) in the fast release activated state 1702 does not meet a designated condition (e.g., less than a threshold number). The electronic device 101 may identify that the serving cell is not included in the blacklist in operation 1719, based on dissatisfaction of the designated condition. The electronic device 101 may enter a fast release inactivated state 1701 based on the serving cell not being included in the blacklist. When the serving cell is included in the blacklist, the electronic device 101 may maintain the fast release activated state 1702. Meanwhile, this is merely an example, and in another example, the electronic device 101 may be implemented to immediately enter the fast release inactivated state 1701 based on the number of expirations of the inactivity timer (e.g., RRC inactivity timer and/or DRX inactivity timer) in the fast release activated state 1702 not meeting a designated condition (e.g., less than a threshold number).

For example, in operation 1712, the electronic device 101 may identify that the condition for determining that only the Keep alive packet is generated in the fast release activated state 1702 is not met. The electronic device 101 may identify that the serving cell is not included in the blacklist in operation 1719, based on dissatisfaction of the designated condition. The electronic device 101 may enter a fast release inactivated state 1701 based on the serving cell not being included in the blacklist. When the serving cell is included in the blacklist, the electronic device 101 may maintain the fast release activated state 1702. Meanwhile, this is merely an example, and in another example, the electronic device 101 may be implemented to immediately enter the fast release inactivated state 1701 based on dissatisfaction of the condition in which only the Keep alive packet is determined to be generated in the fast release activated state 1702.

For example, in operation 1713, the electronic device 101 may identify that a condition for determining that the designated type of application (e.g., a URLLC-related application) is executed in the fast release activated state 1702 is met. The electronic device 101 may identify that the serving cell is not included in the blacklist in operation 1719, based on satisfaction of the designated condition. The electronic device 101 may enter a fast release inactivated state 1701 based on the serving cell not being included in the blacklist. When the serving cell is included in the blacklist, the electronic device 101 may maintain the fast release activated state 1702. Meanwhile, this is merely an example, and in another example, the electronic device 101 may be implemented to immediately enter the fast release inactivated state 1701, based on satisfaction of the condition in which the URLLC-related application is determined to be executed in the fast release activated state 1702.

For example, in operation 1714, the electronic device 101 may identify that a condition for determining that a PDU session of the designated type (e.g., URLLC) is established in the fast release activated state 1702 is met. The electronic device 101 may identify that the serving cell is not included in the blacklist in operation 1719, based on satisfaction of the designated condition. The electronic device 101 may enter a fast release inactivated state 1701 based on the serving cell not being included in the blacklist. When the serving cell is included in the blacklist, the electronic device 101 may maintain the fast release activated state 1702. Meanwhile, this is merely an example, and in another example, the electronic device 101 may be implemented to immediately enter the fast release inactivated state 1701 based on satisfaction of the condition for determining that the PDU session of the URLLC type is established in the fast release activated state 1702.

For example, in operation 1715, the electronic device 101 may identify that a condition for determining that the designated type of application (e.g., an IoT-related application) is terminated in the fast release activated state 1702 is met. The electronic device 101 may identify that at least one of other fast release inactivation conditions is met in operation 1718, based on the satisfaction of the designated condition. When at least one of the other fast release inactivation conditions is met, the electronic device 101 may identify that the serving cell is not included in the blacklist in operation 1719. The electronic device 101 may enter a fast release inactivated state 1701 based on the serving cell not being included in the blacklist. When the serving cell is included in the blacklist, the electronic device 101 may maintain the fast release activated state 1702. Meanwhile, this is merely an example, and in another example, the electronic device 101 may be implemented to immediately enter the fast release inactivated state 1701 when the IoT-related application is terminated in the fast release activated state 1702 and another fast release inactivation condition is met. Meanwhile, if another fast release inactivation condition is not met, the electronic device 101 may maintain the fast release activated state 1702. Determining whether other fast release inactivation conditions are met may be omitted depending on implementation.

For example, in operation 1716, the electronic device 101 may identify that the condition for determining that the PDU session of the designated type (e.g., MIoT) is released in the fast release activated state 1702 is met. The electronic device 101 may identify that at least one of other fast release inactivation conditions is met in operation 1718, based on the satisfaction of the designated condition. When at least one of the other fast release inactivation conditions is met, the electronic device 101 may identify that the serving cell is not included in the blacklist in operation 1719. The electronic device 101 may enter a fast release inactivated state 1701 based on the serving cell not being included in the blacklist. When the serving cell is included in the blacklist, the electronic device 101 may maintain the fast release activated state 1702. Meanwhile, this is merely an example, and in another example, the electronic device 101 may be implemented to immediately enter the fast release inactivated state 1701 when the PDU session is released in the fast release activated state 1702 and another fast release inactive condition is met. Meanwhile, if another fast release inactivation condition is not met, the electronic device 101 may maintain the fast release activated state 1702. Determining whether other fast release inactivation conditions are met may be omitted depending on implementation.

For example, in operation 1717, the electronic device 101 may identify that the time from RRC connection release to RRC connection reattempt meets a designated condition (e.g., a threshold time or less). The electronic device 101 may identify that the serving cell is not included in the blacklist in operation 1719, based on satisfaction of the designated condition. The electronic device 101 may enter a fast release inactivated state 1701 based on the serving cell not being included in the blacklist. When the serving cell is included in the blacklist, the electronic device 101 may maintain the fast release activated state 1702. Meanwhile, this is merely an example, and in another example, the electronic device 101 may be implemented to immediately enter the fast release inactivated state 1701 when the time from the RRC connection release to the RRC connection reattempt is less than or equal to the threshold time.

For example, at least one of the example in which the number of expirations of the inactivity timer does not meet a designated condition in 1711 of FIG. 17, the example in which the condition associated with the Keep alive packet is not met in 1712, the example in which the second type of application is executed in 1713, the example in which the second type of PDU session is established in 1714, or the example in which the time from RRC connection release to RRC connection reattempt meets a designated condition in 1717 is described as whether to perform fast release being switched regardless of whether an additional condition is met as illustrated in FIG. 15B, but this is merely exemplary, and it will be appreciated by one of ordinary skill in the art that it may be implemented to switch whether to perform fast release only when an additional condition is met in addition to satisfaction of at least one of the above examples. Further, at least one of the example in which the first type of application is terminated in 1715 of FIG. 17 or the example in which the first type of PDU session is released in 1716 is described as whether to perform fast release being switched only when an additional condition is met as illustrated in FIG. 15B, but this is merely exemplary, and it will be appreciated by one of ordinary skill in the art that it may be implemented to switch whether to perform fast release only with satisfaction of at least one of the above examples.

FIG. 18 is a view illustrating an operation method of an electronic device according to various embodiments.

According to an embodiment, an electronic device 101 (e.g., at least one of the processor 120, the first communication processor 212, the second communication processor 214, or the integrated communication processor 260) may set the expiration time of the first timer to a first value (e.g., 5 seconds) in operation 1801. In operation 1803, the electronic device 101 may be in the RRC_CONNECTED state. The electronic device 101 may identify that the first timer having the expiration time of the first value expires, and accordingly, may transmit the UEAssistanceInformation message including the preferredRRC-State information element to the network 500. The electronic device 101 may receive an RRC release message corresponding to the UEAssistanceInformation message from the network 500. For example, the RRC release message may be a message causing a change to the RRC_IDLE state. The electronic device 101 may enter the RRC_IDLE state in operation 1805. Meanwhile, in operation 1807, the electronic device 101 may enter the RRC_CONNECTED state again. For example, a communication processor (e.g., at least one of the first communication processor 212, the second communication processor 214, or the integrated communication processor 260) may establish an RRC connection based on a request from an upper layer, and thus may enter the RRC_CONNECTED state again. The electronic device 101 may identify that the first timer having the expiration time of the first value expires, and accordingly, may transmit the UEAssistanceInformation message including the preferredRRC-State information element to the network 500. The electronic device 101 may receive an RRC release message corresponding to the UEAssistanceInformation message from the network 500. For example, the RRC release message may be a message causing a change to the RRC_IDLE state. The electronic device 101 may enter the RRC_IDLE state in operation 1809.

According to various embodiments, in operation 1811, the electronic device 101 may detect an expiration time adjustment event of the first timer. In one example, the electronic device 101 may detect that the accumulated number of RRC release message receptions after entering the fast release activated state is a threshold number (e.g., three times), as an expiration time adjustment event of the first timer. In operation 1813, the electronic device 101 may set the expiration time of the first timer to a second value (e.g., 4 seconds), based on the detection of the expiration time adjustment event of the first timer. The second value may be, e.g., a value smaller than the first value, but may be, in some cases, a value greater than the first value. If the fast release is inactivated, the electronic device 101 may set the expiration time of the first timer to an initial value (e.g., 5 seconds). For example, the electronic device 101 may set the expiration time of the first timer in the order of 5 seconds, 4 seconds, 3 seconds, 2 seconds, and 1 second, and may set (e.g., initialize) the expiration time of the first timer back to the initial value of 5 seconds as the fast release is inactivated. The expiration time of the first timer may be adjusted to a minimum value (e.g., one second). The electronic device 101 may be in the RRC_CONNECTED state in operation 1815. The electronic device 101 may identify that the first timer having the expiration time of the second value expires, and accordingly, may transmit the UEAssistanceInformation message including the preferredRRC-State information element to the network 500. The electronic device 101 may receive an RRC release message corresponding to the UEAssistanceInformation message from the network 500. For example, the RRC release message may be a message causing a change to the RRC_IDLE state. The electronic device 101 may enter the RRC_IDLE state in operation 1817.

According to an embodiment, the electronic device 101 may adjust the expiration time of the first timer based on the temperature measured by the temperature sensor (e.g., the sensor module 176). For example, the electronic device 101 may set a relatively small expiration time of the first timer based on a relatively high temperature being measured. Accordingly, when a relatively high temperature is measured, it is possible to release the RRC connection relatively quickly, thereby increasing the possibility that the over-temperature state is resolved. As another example, the electronic device 101 may adjust the expiration time of the first timer based on the remaining battery capacity. For example, the electronic device 101 may set a relatively small expiration time of the first timer, based on a relatively low remaining battery capacity being measured. Accordingly, when a relatively low remaining battery capacity is measured, relatively fast RRC connection release may be possible, thereby increasing the possibility of reducing power consumption.

FIG. 19A is a view illustrating an operation method of an electronic device according to various embodiments.

According to an embodiment, an electronic device 101 (e.g., at least one of the processor 120, the first communication processor 212, the second communication processor 214, or the integrated communication processor 260) may be in the fast release activated state in operation 1901. In operation 1903, the electronic device 101 may identify whether the first timer expires in the RRC_CONNECTED state. Before the first timer expires (No in 1903), the electronic device 101 may maintain the RRC_CONNECTED state. If the first timer expires (Yes in 1903), the electronic device 101 may transmit the UEAssistanceInformation message including the preferredRRC-State information element of the value determined by the electronic device 101 to the network 500 in operation 1905. The electronic device 101 may determine one of "connected", "idle", "inactive", and "outoOfconnected" as the value of the preferredRRC-State information element. For example, the electronic device 101 may determine "inactive" as the value of the preferredRRC-State information element as the initial value, based on entering the fast release activated state, but the type of the initial value is not limited. The electronic device 101 may then change the value of the preferredRRC-State information element based on detection of a change event of the value of the preferredRRC-State information element. For example, the electronic device 101 may change the value of the preferredRRC-State information element to "idle" by detecting a case where the number of RRC connections (or the number of RRC connection resumptions) is less than or equal to a threshold number as an event. Meanwhile, the above-described change from "inactive" to "idle" is merely exemplary, and the electronic device 101 may change the value of the preferredRRC-State information element from "idle" to "inactive" based on the detection of the event. Alternatively, the electronic device 101 may change the value of the preferredRRC-State information element from "connected" to "inactive" or "idle" based on the detection of the event, and the combination of the values of the preferredRRC-State information element before and after the change is not limited. The electronic device 101 may receive an RRC release message corresponding to the UEAssistanceInformation message from the network 500 in operation 1907. In operation 1909, the electronic device 101 may change the RRC state based on information included in the RRC release message. For example, the electronic device 101 may enter the RRC_INACTIVE state based on reception of the RRC release message including the suspendConfig information element. For example, the electronic device 101 may enter the RRC_INACTIVE state based on reception of the RRC release message that does not include the suspendConfig information element.

FIG. 19B is a view illustrating an operation method of an electronic device according to various embodiments.

According to an embodiment, an electronic device 101 (e.g., at least one of the processor 120, the first communication processor 212, the second communication processor 214, or the integrated communication processor 260) may be in the fast release activated state in operation 1921. In operation 1923, the electronic device 101 may set "inactive" as the value of the preferredRRC-State information element. In one example, the electronic device 101 may set "inactive" as the initial value of the preferredRRC-State information element, based on the entry to the fast release activation. Alternatively, the electronic device 101 may be in a state of performing a change from another previous value to "inactive". For example, the electronic device 101 may be in a state of having changed from a state in which "idle" is set as the initial value of the preferredRRC-State information element to "inactive" based on the number of RRC connection establishments during a designated period exceeding a threshold number. The electronic device 101 may transmit the UEAssistanceInformatino message including the preferredRRC-State information element of "inactive", may receive an RRC release message including the suspendConfig information element corresponding thereto from the network 500, and may enter the RRC_INACTIVE state accordingly. Meanwhile, the electronic device 101 may enter the RRC_CONNECTED state again. For example, the electronic device 101 may attempt to enter the RRC _CONNECTED state by transmitting an RRC resume request message to the network 500. The electronic device 101 may repeat the change between the RRC _CONNECTED state and the RRC _INACTIVE state as the preferredRRC-State information element is set to "inactive".

According to various embodiments, in operation 1925, the electronic device 101 may identify the number of RRC connection resumptions during a designated period. As described above, the electronic device 101 may repeat the change between the RRC_CONNECTED state and the RRC_INACTIVE state as the preferredRRC-State information element is set to "inactive", and may count the number of RRC connection resumptions. In operation 1927, the electronic device 101 may identify whether the identified number of times is less than or equal to a threshold number. If the identified number of times is less than or equal to the threshold number (Yes in 1927), the electronic device 101 may set the preferredRRC-State information element to "idle". When the number of RRC connection resumptions is less than or equal to the threshold number, it may mean that the number of situations in which RRC connection is required is relatively small. Accordingly, the electronic device 101 may change the preferredRRC-State information element from "inactive" to "idle". When the identified number of times exceeds the threshold number (No in 1927), the electronic device 101 may maintain the preferredRRC-State information element as "inactive". When the number of RRC connection resumptions exceeds the threshold number, it may mean that a situation in which RRC connection is required occurs relatively frequently. Accordingly, the electronic device 101 may maintain the preferredRRC-State information element as "inactive".

FIG. 20 is a view illustrating an operation method of an electronic device according to various embodiments.

According to an embodiment, an electronic device 101 (e.g., at least one of the processor 120, the first communication processor 212, the second communication processor 214, or the integrated communication processor 260) may be in the RRC _CONNECTED state in operation 2001. In operation 2003, the electronic device 101 may transmit a UEAssistanceInformation message to the network 500. Referring to the information 2003a included in the UEAssistanceInformation message, it may be identified that the IE(s) of the UEAssistanceInformation include an information element of ReleasePreference, and the information element of ReleasePreference includes an information element of preferredRRC-State having an "idle" value. For example, it is assumed that the electronic device 101 determines the value of the information element of preferredRRC-State as "idle". The electronic device 101 may transmit a UEAssistanceInformation message to the network 500 based on the expiration of the first timer, e.g., in the fast release activated state.

According to various embodiments, after transmitting the UEAssistanceInformation message, the electronic device 101 may identify that RRC connection is required in operation 2005. For example, a communication processor (e.g., at least one of the first communication processor 212, the second communication processor 214, or the integrated communication processor 260) may identify that RRC connection is required, based on a request from the upper layer. In operation 2007, the electronic device 101 may transmit a UEAssistanceInformation message to the network 500. Referring to the information 2007a included in the UEAssistanceInformation message, it may be identified that the IE(s) of the UEAssistanceInformation include an information element of ReleasePreference, and the information element of ReleasePreference includes an information element of preferredRRC-State having a "connected" value. The electronic device 101 may set the value of the information element of preferredRRC-State to "connected" based on the RRC connection being required. The network 500 may refrain from transmitting the RRC release message based on reception of the UEAssistanceInformation message including the information element of the preferredRRC-State of the "connected" value. Accordingly, in operation 2009, the electronic device 101 may maintain the RRC_CONNECTED state.

FIG. 21 is a view illustrating an operation method of an electronic device according to various embodiments.

According to an embodiment, an electronic device 101 (e.g., at least one of the processor 120, the first communication processor 212, the second communication processor 214, or the integrated communication processor 260) may be in the RRC _CONNECTED state in operation 2101. In operation 2103, the electronic device 101 may detect an event for fast release. For example, the electronic device 101 may detect expiration of the first timer as the event for fast release. In operation 2105, the electronic device 101 may transmit a UEAssistanceInformation message. Referring to the information 2105a included in the UEAssistanceInformation message, it may be identified that the IE(s) of the UEAssistanceInformation include an information element of ReleasePreference, and the information element of ReleasePreference includes an information element of preferredRRC-State having an "outOfConnected" value. The "outOfConnected" value may be a preset value between the electronic device 101 and the network 500 that causes an RRC state change without message transmission/reception. The "outOfConnected" value is merely exemplary, and for example, in the current TS 38.331, an undefined value (e.g., "inactive _maintain") may be used, or any one of "inactive", "idle", and "connected" may be used. The network 500 may transmit the RRC release message to the electronic device 101 in operation 2107, based on reception of the UEAssistanceInformation message including the information element of the preferredRRC-State of the "outOfConnected" value. The electronic device 101 may receive an RRC release message, and may enter the RRC_IDLE state in operation 2109. Thereafter, although not illustrated, the electronic device 101 and the network 500 may enter the RRC_CONNECTED state again. The electronic device 101 may enter the RRC_CONNECTED state again based on the transmission of the RRC setup request message, the reception of the RRC setup message, and/or the transmission of the RRC setup complete message. Meanwhile, it is merely exemplary that the electronic device 101 enters the RRC_IDLE state in operation 2109, and the electronic device 101 may enter the RRC_INACTIVE state. Thereafter, the electronic device 101 and the network 500 may enter the RRC _CONNECTED state again.

According to various embodiments, in operation 2113, the network 500 may detect an event for fast release. For example, the network 500 may start the timer based on the transmission of the RRC release message in operation 2107, and may detect expiration of the timer as an event for fast release. The expiration time of the timer is not limited as long as it is shorter than the expiration time of the RRC inactivity timer. In operation 2115, the network 500 may transmit an RRC release message for fast release to the electronic device 101. The network 500 may transmit an RRC release message to the electronic device 101 before the RRC inactivity timer expires even without receiving the UEAssistanceInformation message from the electronic device 101. The electronic device 101 may enter the RRC_IDLE state (or, in another example, the RRC_INACTIVE state) in operation 2117 based on reception of the RRC release message. As described above, the electronic device 101 may perform fast release even without transmitting the UEAssistanceInformation message, reducing required signaling.

According to various embodiments, the electronic device 101 may request inactivation of the fast RRC connection release function of the network 500. The electronic device 101 may transmit a message requesting inactivation of the fast RRC connection release function to the network 500, and the network 500 may inactivate the fast RRC connection release function of the network 500. In one example, the electronic device 101 may transmit a UEAssistanceInformation message in which no value is written in the information element of ReleasePreference to the network 500 as a message requesting inactivation of the fast RRC connection release function. Alternatively, the electronic device 101 may transmit, to the network 500, a UEAssistanceInformation message including a ReleasePreference of a value (e.g., "inactive", "idle", or "connected") different from a value (e.g., "outOfConnected" or "inactive_maintain") designated to activate the function of fast RRC connection release, as a message requesting inactivation of the function of fast RRC connection release. For example, after the function is inactivated, the network 500 may transmit an RRC release message to the electronic device 101, based on reception of the UEAssistanceInformation message or expiration of the RRC inactivity timer.

According to various embodiments, an electronic device (e.g., the electronic device 101) may comprise at least one processor (e.g., at least one of the processor 120, the first communication processor 212, the second communication processor 214, or the integrated communication processor 260). The at least one processor may be configured to identify expiration of a first timer having an expiration time shorter than an RRC inactivity timer set by a network in an RRC _CONNECTED state, identify whether a UEAssistanceInformation message including a preferredRRC-State information element is transmittable based on expiration of the first timer, when the UEAssistanceInformation message including the preferredRRC-State information element is not transmittable, identify whether the RRC inactivity timer starting simultaneously with the first timer expires, change an RRC state from the RRC_CONNECTED state to an RRC_INACTIVE state or an RRC_IDLE state based on expiration of the RRC inactivity timer, and when the UEAssistanceInformation message including the preferredRRC-State information element is transmittable, transmit, to the network, the UEAssistanceInformation message including the preferredRRC-State information element for causing the change of the RRC state from the RRC _CONNECTED state to the RRC INACTIVE state or the RRC_IDLE state.

According to various embodiments, the at least one processor may be configured to, as at least part of identifying whether the UEAssistanceInformation message including the preferredRRC-State information element is transmittable, identify an accumulated count of expiration of the RRC inactivity timer during a past first period from a time of expiration of the first timer, and identify that the UEAssistanceInformation message including the preferredRRC-State information element is not transmittable based on the accumulated count of expiration being a threshold number or more or identify that the UEAssistanceInformation message including the preferredRRC-State information element is transmittable based on the accumulated count of expiration being less than the threshold number.

According to various embodiments, the at least one processor may be configured to, as at least part of identifying whether the UEAssistanceInformation message including the preferredRRC-State information element is transmittable, identify an accumulated count of RRC connection establishment and/or RRC connection resumption during a past second period from the time of expiration of the first timer and identify that the UEAssistanceInformation message including the preferredRRC-State information element is transmittable based on the accumulated count being a threshold number or more or identify that the UEAssistanceInformation message including the preferredRRC-State information element is not transmittable based on the accumulated count being less than the threshold number.

According to various embodiments, the at least one processor may be configured to, as at least part of identifying whether the UEAssistanceInformation message including the preferredRRC-State information element is transmittable, identify execution of a first application generating a Keep alive packet, identify whether information associated with a packet generated by the electronic device meets a designated condition based on execution of the first application, identify that the UEAssistanceInformation message including the preferredRRC-State information element is transmittable based on the information associated with the packet meeting the designated condition or identify that the UEAssistanceInformation message including the preferredRRC-State information element is not transmittable based on the information associated with the packet not meeting the designated condition.

According to various embodiments, the at least one processor may be configured to, as at least part of identifying whether the UEAssistanceInformation message including the preferredRRC-State information element is transmittable, identify a difference between a first time of transmitting a UEAssistanceInformation message including another preferredRRC-State information element transmitted before a time of expiration of the first timer and a second time of attempting to establish and/or resume an RRC connection between the first time and the time of expiration of the first timer and identify that the UEAssistanceInformation message including the preferredRRC-State information element is transmittable based on the difference exceeding a threshold or identify that the UEAssistanceInformation message including the preferredRRC-State information element is not transmittable based on the difference being the threshold or less.

According to various embodiments, the at least one processor may be configured to, as at least part of identifying whether the UEAssistanceInformation message including the preferredRRC-State information element is transmittable, identify whether a second timer, starting from a third time when a UEAssistanceInformation message including another preferredRRC-State information element before expiration of the first timer is transmitted, expires, at a fourth time of attempting to establish and/or resume an RRC connection after the third time and before the time of expiration of the first timer and identify that the UEAssistanceInformation message including the preferredRRC-State information element is transmittable based on the second timer expiring or identify that the UEAssistanceInformation message including the preferredRRC-State information element is not transmittable based on the second timer not expiring.

According to various embodiments, the at least one processor may be configured to, as at least part of identifying whether the UEAssistanceInformation message including the preferredRRC-State information element is transmittable, identify execution of a second application and identify that the UEAssistanceInformation message including the preferredRRC-State information element is transmittable based on a type of the second application being a designated type or identify that the UEAssistanceInformation message including the preferredRRC-State information element is not transmittable based on the type of the second application being not the designated type.

According to various embodiments, the at least one processor may be configured to, as at least part of identifying whether the UEAssistanceInformation message including the preferredRRC-State information element is transmittable, identify establishment of a PDU session and identify that the UEAssistanceInformation message including the preferredRRC-State information element is transmittable based on a type of the PDU session being a designated type or identify that the UEAssistanceInformation message including the preferredRRC-State information element is not transmittable based on the type of the PDU session being not the designated type.

According to various embodiments, the at least one processor may be configured to, as at least part of identifying whether the UEAssistanceInformation message including the preferredRRC-State information element is transmittable, identify whether a serving cell included in the network has a history of not transmitting an RRC release message despite of expiration of the RRC inactivity timer before the time of expiration of the first timer and identify that the UEAssistanceInformation message including the preferredRRC-State information element is transmittable based on there being the history of not transmitting the RRC release message or identify that the UEAssistanceInformation message including the preferredRRC-State information element is not transmittable based on there not being the history of not transmitting the RRC release message.

According to various embodiments, the at least one processor may be further configured to switch whether the UEAssistanceInformation message including the preferredRRC-State information element is transmittable based on identifying that a first condition is met and switch, back to a previous state, whether the UEAssistanceInformation message including the preferredRRC-State information element is transmittable, based on identifying that the first condition is not met.

According to various embodiments, the at least one processor may be configured to switch whether the UEAssistanceInformation message including the preferredRRC-State information element is transmittable based on identifying that a first condition is met and switch, back to a previous state, whether the UEAssistanceInformation message including the preferredRRC-State information element is transmittable, based on identifying that the first condition is not met and that at least one second condition different from the first condition is met.

According to various embodiments, the at least one processor may be further configured to set the expiration time of the first timer based on at least one of the number of times of establishing and/or resuming the RRC connection of the electronic device, the temperature of the electronic device, or the remaining battery power of the electronic device.

According to various embodiments, the at least one processor may be further configured to determine a value of the preferredRRC-State information element as either "inactive" corresponding to the RRC_INACTIVE state or "idle" corresponding to the RRC_IDLE state.

According to various embodiments, the at least one processor may be configured to, as at least part of determining a value of the preferredRRC-State information element as either "inactive" or "idle" determine the value of the preferredRRC-State information element as either "inactive" or "idle" based on a number of times in which the electronic device changes an RRC state from the RRC_INACTIVE state to the RRC_CONNECTED state during a past third period from the time of expiration of the first timer.

According to various embodiments, the at least one processor may be further configured to identify that it is required to maintain the RRC _CONNECTED state after transmitting the UEAssistanceInformation message including the preferredRRC-State information element to the network and transmit, to the network, another UEAssistanceInformation message including a preferredRRC-State information element having a "connected" value based on identifying that it is required to maintain the RRC_CONNECTED state.

According to various embodiments, a method for operating a network may comprise entering an RRC _CONNECTED state by establishing an RRC connection with an electronic device, receiving a UEAssistanceInformation message including a preferredRRC-State information element from the electronic device, changing an RRC state from the RRC _CONNECTED state to an RRC_INACTIVE state or an RRC_IDLE state by releasing the RRC connection based on a value of the preferredRRC-State information element corresponding to a designated value, changing the RRC state to the RRC _CONNECTED state by establishing or resuming the RRC connection based on receiving a message for requesting to establish or resume the RRC connection from the electronic device, and transmitting, to the electronic device, an RRC release message for releasing the RRC connection based on detecting an event for releasing the RRC connection in the RRC _CONNECTED state.

According to various embodiments, a method for operating an electronic device may comprise identifying expiration of a first timer having an expiration time shorter than an RRC inactivity timer set by a network in an RRC_CONNECTED state and identifying whether a UEAssistanceInformation message including a preferredRRC-State information element is transmittable based on expiration of the first timer. The method for operating the electronic device may further comprise, when the UEAssistanceInformation message including the preferredRRC-State information element is not transmittable, identifying whether the RRC inactivity timer starting simultaneously with the first timer expires and changing an RRC state from the RRC_CONNECTED state to an RRC INACTIVE state or an RRC_IDLE state based on expiration of the RRC inactivity timer. The method for operating the electronic device may further comprise, when the UEAssistanceInformation message including the preferredRRC-State information element is transmittable, transmitting, to the network, the UEAssistanceInformation message including the preferredRRC-State information element for causing the change of the RRC state from the RRC_CONNECTED state to the RRC_INACTIVE state or the RRC_IDLE state.

According to various embodiments, the method for operating the electronic device may further comprise switching whether the UEAssistanceInformation message including the preferredRRC-State information element is transmittable based on identifying that a first condition is met and switching, back to a previous state, whether the UEAssistanceInformation message including the preferredRRC-State information element is transmittable, based on identifying that the first condition is not met.

According to various embodiments, the method for operating the electronic device may further comprise switching whether the UEAssistanceInformation message including the preferredRRC-State information element is transmittable based on identifying that a first condition is met and switching, back to a previous state, whether the UEAssistanceInformation message including the preferredRRC-State information element is transmittable, based on identifying that the first condition is not met and that at least one second condition different from the first condition is met.

According to various embodiments, the method for operating the electronic device may further comprise determining a value of the preferredRRC-State information element as either "inactive" corresponding to the RRC_INACTIVE state or "idle" corresponding to the RRC_IDLE state.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
at least one processor, wherein the at least one processor is configured to:
identify expiration of a first timer having an expiration time shorter than an RRC inactivity timer set by a network in an RRC_CONNECTED state;
based on expiration of the first timer, identify whether a UEAssistanceInformation message including a preferredRRC-State information element is transmittable;
when the UEAssistanceInformation message including the preferredRRC-State information element is not transmittable:
identify whether the RRC inactivity timer starting simultaneously with the first timer expires; and
based on expiration of the RRC inactivity timer, change an RRC state from the RRC_CONNECTED state to an RRC_INACTIVE state or an RRC_IDLE state; and
when the UEAssistanceInformation message including the preferredRRC-State information element is transmittable:
transmit, to the network, the UEAssistanceInformation message including the preferredRRC-State information element for causing the change of the RRC state from the RRC_CONNECTED state to the RRC_INACTIVE state or the RRC_IDLE state.

2. The electronic device of claim 1, wherein the at least one processor is configured to, as at least part of identifying whether the UEAssistanceInformation message including the preferredRRC-State information element is transmittable:
identify an accumulated count of expiration of the RRC inactivity timer during a past first period from a time of expiration of the first timer; and
based on the accumulated count of expiration being a threshold number or more, identify that the UEAssistanceInformation message including the preferredRRC-State information element is not transmittable or based on the accumulated count of expiration being less than the threshold number, identify that the UEAssistanceInformation message including the preferredRRC-State information element is transmittable.

3. The electronic device of claim 1, wherein the at least one processor is configured to, as at least part of identifying whether the UEAssistanceInformation message including the preferredRRC-State information element is transmittable:
identify an accumulated count of RRC connection establishment and/or RRC connection resumption during a past second period from the time of expiration of the first timer; and
based on the accumulated count being a threshold number or more, identify that the UEAssistanceInformation message including the preferredRRC-State information element is transmittable or based on the accumulated count being less than the threshold number, identify that the UEAssistanceInformation message including the preferredRRC-State information element is not transmittable.

4. The electronic device of claim 1, wherein the at least one processor is configured to, as at least part of identifying whether the UEAssistanceInformation message including the preferredRRC-State information element is transmittable:
identify execution of a first application generating a Keep alive packet;
based on execution of the first application, identify whether information associated with a packet generated by the electronic device meets a designated condition; and
based on the information associated with the packet meeting the designated condition, identify that the UEAssistanceInformation message including the preferredRRC-State information element is transmittable or based on the information associated with the packet not meeting the designated condition, identify that the UEAssistanceInformation message including the preferredRRC-State information element is not transmittable.

5. The electronic device of claim 1, wherein the at least one processor is configured to, as at least part of identifying whether the UEAssistanceInformation message including the preferredRRC-State information element is transmittable:
identify a difference between a first time of transmitting a UEAssistanceInformation message including another preferredRRC-State information element transmitted before a time of expiration of the first timer and a second time of attempting to establish and/or resume an RRC connection between the first time and the time of expiration of the first timer; and
based on the difference exceeding a threshold, identify that the UEAssistanceInformation message including the preferredRRC-State information element is transmittable or based on the difference being the threshold or less, identify that the UEAssistanceInformation message including the preferredRRC-State information element is not transmittable.

6. The electronic device of claim 1, wherein the at least one processor is configured to, as at least part of identifying whether the UEAssistanceInformation message including the preferredRRC-State information element is transmittable:
identify whether a second timer, starting from a third time when a UEAssistanceInformation message including another preferredRRC-State information element before expiration of the first timer is transmitted, expires, at a fourth time of attempting to establish and/or resume an RRC connection after the third time and before the time of expiration of the first timer; and
based on the second timer expiring, identify that the UEAssistanceInformation message including the preferredRRC-State information element is transmittable or based on the second timer not expiring, identify that the UEAssistanceInformation message including the preferredRRC-State information element is not transmittable.

7. The electronic device of claim 1, wherein the at least one processor is configured to, as at least part of identifying whether the UEAssistanceInformation message including the preferredRRC-State information element is transmittable:
identify execution of a second application; and
based on a type of the second application being a designated type, identify that the UEAssistanceInformation message including the preferredRRC-State information element is transmittable or based on the type of the second application being not the designated type, identify that the UEAssistanceInformation message including the preferredRRC-State information element is not transmittable.

8. The electronic device of claim 1, wherein the at least one processor is configured to, as at least part of identifying whether the UEAssistanceInformation message including the preferredRRC-State information element is transmittable:
identify establishment of a PDU session; and
based on a type of the PDU session being a designated type, identify that the UEAssistanceInformation message including the preferredRRC-State information element is transmittable or based on the type of the PDU session being not the designated type, identify that the UEAssistanceInformation message including the preferredRRC-State information element is not transmittable.

9. The electronic device of claim 1, wherein the at least one processor is configured to, as at least part of identifying whether the UEAssistanceInformation message including the preferredRRC-State information element is transmittable:
identify whether a serving cell included in the network has a history of not transmitting an RRC release message despite of expiration of the RRC inactivity timer before the time of expiration of the first timer; and
based on there being the history of not transmitting the RRC release message, identify that the UEAssistanceInformation message including the preferredRRC-State information element is transmittable or based on there not being the history of not transmitting the RRC release message, identify that the UEAssistanceInformation message including the preferredRRC-State information element is not transmittable.

10. The electronic device of claim 1, wherein the at least one processor is further configured to:
based on identifying that a first condition is met, switch whether the UEAssistanceInformation message including the preferredRRC-State information element is transmittable; and
based on identifying that the first condition is not met, switch, back to a previous state, whether the UEAssistanceInformation message including the preferredRRC-State information element is transmittable.

11. The electronic device of claim 1, wherein the at least one processor is configured to:
based on identifying that a first condition is met, switch whether the UEAssistanceInformation message including the preferredRRC-State information element is transmittable; and
based on identifying that the first condition is not met and that at least one second condition different from the first condition is met, switch, back to a previous state, whether the UEAssistanceInformation message including the preferredRRC-State information element is transmittable,.

12. The electronic device of claim 1, wherein the at least one processor is further configured to determine a value of the preferredRRC-State information element as either "inactive" corresponding to the RRC_INACTIVE state or "idle" corresponding to the RRC_IDLE state.

13. The electronic device of claim 1, wherein the at least one processor is configured to, as at least part of determining a value of the preferredRRC-State information element as either "inactive" or "idle":
based on a number of times in which the electronic device changes an RRC state from the RRC_INACTIVE state to the RRC_CONNECTED state during a past third period from the time of expiration of the first timer, determine the value of the preferredRRC-State information element as either "inactive" or "idle".

14. The electronic device of claim 1, wherein the at least one processor is further configured to:
identify that it is required to maintain the RRC_CONNECTED state after transmitting the UEAssistanceInformation message including the preferredRRC-State information element to the network; and
based on identifying that it is required to maintain the RRC_CONNECTED state, transmit, to the network, another UEAssistanceInformation message including a preferredRRC-State information element having a "connected" value.

15. A method for operating a network, the method comprising:
entering an RRC_CONNECTED state by establishing an RRC connection with an electronic device;
receiving a UEAssistanceInformation message including a preferredRRC-State information element from the electronic device;
changing an RRC state from the RRC_CONNECTED state to an RRC_INACTIVE state or an RRC_IDLE state by releasing the RRC connection based on a value of the preferredRRC-State information element corresponding to a designated value;
changing the RRC state to the RRC_CONNECTED state by establishing or resuming the RRC connection based on receiving a message for requesting to establish or resume the RRC connection from the electronic device; and
based on detecting an event for releasing the RRC connection in the RRC_CONNECTED state, transmitting, to the electronic device, an RRC release message for releasing the RRC connection.
